# EUROPEAN PATENT SPECIFICATION

(11) **EP 3 374 914 B1**
(45) Date of publication and mention of the grant of the patent: **17.02.2021**
(21) Application number: 16884045.2
(22) Date of filing: 28.12.2016
(51) Int. Cl.: G06F 21/32, G06F 21/35, G06K 9/00, H04L 9/32, H04L 9/08, H04W 4/00, G06F 21/34, G06F 21/44, H04M 1/725

(54) **ELECTRONIC DEVICE AND OPERATING METHOD THEREOF**
ELEKTRONISCHE VORRICHTUNG UND BETRIEBSVERFAHREN DAMIT
DISPOSITIF ÉLECTRONIQUE ET SON PROCÉDÉ DE FONCTIONNEMENT

(30) Priority: 04.01.2016 KR 20160000617
(43) Date of publication of application: 19.09.2018
(73) Proprietor: Samsung Electronics Co., Ltd., Suwon-si, Gyeonggi-do 16677 (KR)
(72) Inventor: CHOI, Wooyoung, Hwaseong-si Gyeonggi-do 18443 (KR); KIM, Hakjoo, Yongin-si Gyeonggi-do 16929 (KR); PARK, Sangho, Anyang-si Gyeonggi-do 14074 (KR); PARK, Yong-Jun, Suwon-si Gyeonggi-do 16509 (KR); LEE, Gwiho, Uiwang-si Gyeonggi-do 16062 (KR); JWA, Ho-Dong, Suwon-si Gyeonggi-do 16694 (KR); KIM, Young-Kyoo, Seoul 02146 (KR)
(74) Representative: HGF
(86) International application number: PCT/KR2016/015374
(87) International publication number: WO 2017/119662

(56) References cited:
- JP-A- 2014 119 830
- KR-A- 20070 119 922
- KR-A- 20150 059 473
- US-A1- 2011 221 568
- US-A1- 2013 212 645
- US-A1- 2015 271 175
- US-A1- 2015 304 321
- US-A1- 2015 341 349
- US-A1- 2015 358 315

## Description

### Technical Field

The present disclosure relates generally to an electronic device that registers biometric information in the electronic device and performs authentication of another electronic device using the registered biometric information, and an operating method thereof.

### Background Art

Recently, with the increasing importance of the protection of personal information, there are a growing number of services with a high security level using biometric information recognition of a user, such as iris recognition and fingerprint recognition. Currently, a method is generally used in which an electronic device converts biometric information on a user into digital information and encodes the digital information to be used as user authentication information. The electronic device performs user authentication by receiving, via a cable, biometric data recognized by a biometric recognition sensor embedded in an electronic device to be authenticated or biometric data recognized by an external biometric recognition sensor provided outside the electronic device.

The foregoing electronic device is incapable of performing user authentication when an electronic device to be subjected to user authentication includes no biometric recognition sensor embedded therein or no external biometric recognition sensor.

US 2011/221568 A1 discloses a system and method provide automatic access to applications or data. A portable physical device, referred to as a Personal Digital Key or "PDK", stores one or more profiles in memory, including a biometric profile acquired in a secure trusted process and uniquely associated with a user that is authorized to use and associated with the PDK. The PDK wirelessly transmits identification information including a unique PDK identification number, the biometric profile and a profile over a secure wireless channel to a reader. A computing device is coupled to the reader. An auto login server is coupled to the reader and the computing device and launches one or more applications associated with a user name identified by the received profile.

US 2013/212645 A1 discloses that, at a time of enrollment, a client terminal: generates a feature polynomial from biometric information for enrollment; multiplies the feature polynomial by a prescribed integer; stores a helper polynomial obtained by multiplying an inverse polynomial of a template polynomial, a polynomial having a small norm; and transmits the template polynomial to an authentication server. The authentication server stores the template polynomial in a storage unit. At a time of authentication, the client terminal: generates a feature polynomial from biometric information for authentication; multiplies the helper polynomial by the feature polynomial; adds a random polynomial having a small norm to the authentication polynomial; and transmits the authentication polynomial to the authentication server.; The authentication server determines whether or not the biometric information for enrollment and for authentication can be authenticated, based on the result obtained by multiplying the authentication polynomial by the template polynomial.

US 2015/341349 A1 discloses a method including receiving a registration input including a first raw biometric template and a user identifier. The first raw biometric template may be representative of unique features of a biometric characteristic of a user associated with the user identifier. The method includes generating a first transformed biometric template by applying a random projection to the first raw biometric template and communicating the first transformed biometric template and the user identifier to an authentication server. The method includes receiving a challenge input including a second raw biometric template and the user identifier. The method includes generating a second transformed biometric template and communicating the second transformed biometric template and the user identifier to the authentication server. The method includes receiving a signal indicative of an authentication decision from the authentication server.

### Disclosure of Invention

### Solution to Problem

To address the conventional problem, various example embodiments of the present disclosure relate to an electronic device that is capable of providing an authentication function through biometric information recognition among different types of electronic devices, and an operating method thereof.

The invention is defined by the independent claims. Further aspects of the invention are outlined in the dependent claims. When the term "embodiment" is used for describing an unclaimed combination of features, it has to be understood as referring to an example useful for understanding the present invention..

Also disclosed is an electronic device including: a sensor unit comprising at least one sensor; a communication unit comprising communication circuitry; and a processor functionally connected to the sensor unit and the communication unit, wherein the processor may be configured to acquire biometric information corresponding to a user of the electronic device using the sensor unit, to generate virtual biometric information at least based on the biometric information, and to provide the virtual biometric information to an external device through the communication unit wherein the external device is configured to register the virtual biometric information as information for authenticating the user.

Also disclosed is a method of operating an electronic device, the method including: acquiring biometric information corresponding to a user of the electronic device; generating virtual biometric information at least based on the biometric information; and providing the virtual biometric information to an external device so that the external device can register the virtual biometric information as information for authenticating the user.

Also disclosed is an electronic device including: a memory; a communication unit comprising communication circuitry configured to communicate with a first external device and a second external device; and a processor, wherein the processor may be configured to: receive virtual biometric information, generated using biometric information corresponding to a user of the first external device and the electronic device, from the first external device; store the virtual biometric information in the memory; and transmit the stored virtual biometric information to the second external device.

### Brief Description of Drawings

The above and other aspects, features, and attendant advantages of the present disclosure will be more apparent and readily appreciated from the following detailed description, taken in conjunction with the accompanying drawings, in which like reference numerals refer to like elements, and wherein:
FIG. 1 is a diagram illustrating an example network environment including an electronic device according to an example embodiment of the present disclosure;
FIG. 2 is a block diagram illustrating an example configuration of an electronic device according to an example embodiment of the present disclosure;
FIG. 3 is a block diagram illustrating an example program module according to an example embodiment of the present disclosure;
FIG. 4 is a block diagram illustrating an example communication system according to an example embodiment of the present disclosure;
FIG. 5 is a flowchart illustrating an example method of registering biometric information in the communication system according to an example embodiment of the present disclosure;
FIG. 6 is a flowchart illustrating an example method of registering biometric information in the communication system according to an example embodiment of the present disclosure;
FIG. 7 is a flowchart illustrating an example method of operating a first electronic device according to an example embodiment of the present disclosure;
FIG. 8 is a flowchart illustrating an example method of operating a second electronic device according to an example embodiment of the present disclosure;
FIG. 9 is a flowchart illustrating an example method of registering biometric information in the communication system according to another example embodiment of the present disclosure;
FIG. 10 is a flowchart illustrating an example method of operating the first electronic device according to another example embodiment of the present disclosure;
FIG. 11 is a flowchart illustrating an example method of performing authentication in the communication system according to an example embodiment of the present disclosure;
FIG. 12 is a flowchart illustrating an example method of performing authentication in the communication system according to an example embodiment of the present disclosure;
FIG. 13 is a flowchart illustrating an example method of operating the first electronic device according to an example embodiment of the present disclosure;
FIG. 14 is a flowchart illustrating an example method of operating the second electronic device according to an example embodiment of the present disclosure;
FIG. 15 is a flowchart illustrating an example method of performing authentication in the communication system according to another example embodiment of the present disclosure;
FIG. 16 is a flowchart illustrating an example method of operating the first electronic device according to another example embodiment of the present disclosure;
FIG. 17 is a block diagram illustrating an example communication system according to an example embodiment of the present disclosure;
FIG. 18 is a flowchart illustrating an example method of registering biometric information in the communication system according to an example embodiment of the present disclosure;
FIG. 19 is a flowchart illustrating an example method of registering biometric information in the communication system according to an example embodiment of the present disclosure;
FIG. 20 is a flowchart illustrating an example method of operating a third electronic device according to an example embodiment of the present disclosure;
FIG. 21 is a flowchart illustrating an example method of registering biometric information in the communication system according to another example embodiment of the present disclosure;
FIG. 22 is a flowchart illustrating an example method in which a first electronic device stores biometric information in the third electronic device according to an example embodiment of the present disclosure;
FIG. 23 is a flowchart illustrating an example method of operating the first electronic device according to an example embodiment of the present disclosure;
FIG. 24 is a flowchart illustrating an example method of operating the third electronic device according to an example embodiment of the present disclosure;
FIG. 25 is a flowchart illustrating an example method of unlocking a second electronic device according to an example embodiment of the present disclosure; and
FIG. 26 is a flowchart illustrating an example method of operating the third electronic device according to an example embodiment of the present disclosure.

### Best Mode for Carrying out the Invention

Hereinafter, various example embodiments of the present disclosure will be described with reference to the accompanying drawings. However, it should be understood that there is no intent to limit the present disclosure to the particular forms disclosed herein; rather, the present disclosure should be understood to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including both at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposed between them. On the other hand, it may be understood that when an element (e.g., first element) is referred to as being "directly connected," or "directly coupled" to another element (second element), there are no element (e.g., third element) interposed between them.

The expression "configured to" used in the present disclosure may be used interchangeably with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may refer, for example, to a situation in which the device, together with other devices or components, "is able to". For example, the phrase "processor adapted (or configured) to perform A, B, and C" may refer, for example, to a dedicated processor (e.g. embedded processor) for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings that are the same as the contextual meanings in the relevant field of art, and are not to be interpreted to have ideal or excessively formal meanings unless clearly defined in the present disclosure. In some cases, even if the term is defined in the present disclosure, it should not be interpreted to exclude embodiments of the present disclosure.

An electronic device according to various example embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device, or the like, but is not limited thereto. According to various example embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit), or the like, but is not limited thereto.

According to some example embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame, or the like, but is not limited thereto.

According to another example embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.), or the like, but is not limited thereto.

According to some example embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter), or the like, but is not limited thereto. The electronic device according to various example embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various example embodiments will be described in greater detail with reference to the accompanying drawings. As used herein, the term "user" may indicate a person who uses an electronic device or a device (e.g., an artificial intelligence electronic device) that uses an electronic device.

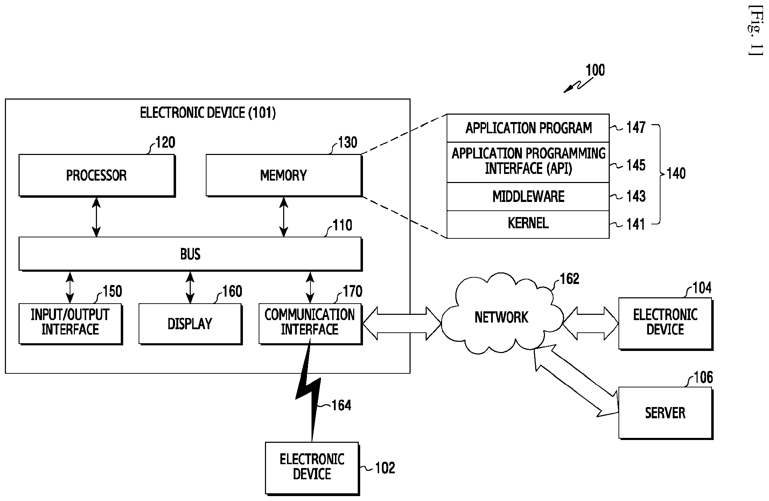

FIG. 1 is a diagram illustrating an example network environment including an electronic device according to various example embodiments of the present disclosure.

An electronic device 101 within a network environment 100, according to various embodiments, will be described with reference to FIG. 1. The electronic device 101 may include a bus 110, a processor (e.g., including processing circuitry) 120, a memory 130, an input/output interface (e.g., including input/output circuitry) 150, a display 160, and a communication interface (e.g., including communication circuitry) 170. In some example embodiments, the electronic device 101 may omit at least one of the above elements or may further include other elements.

The bus 110 may include, for example, a circuit for connecting the elements 110 - 170 and transferring communication (e.g., control messages and/or data) between the elements.

The processor 120 may include various processing circuitry, such as, for example, and without limitation, one or more of a dedicated processor, a Central Processing Unit (CPU), an Application Processor (AP), and a Communication Processor (CP). The processor 120, for example, may carry out operations or data processing relating to control and/or communication of at least one other element of the electronic device 101.

The memory 130 may include a volatile memory and/or a non-volatile memory. The memory 130 may store, for example, instructions or data relevant to at least one other element of the electronic device 101. According to an example embodiment, the memory 130 may store software and/or a program 140. The program 140 may include, for example, a kernel 141, middleware 143, an Application Programming Interface (API) 145, and/or application programs (or "applications") 147. At least some of the kernel 141, the middleware 143, and the API 145 may be referred to as an Operating System (OS).

The kernel 141 may control or manage system resources (e.g., the bus 110, the processor 120, or the memory 130) used for performing an operation or function implemented by the other programs (e.g., the middleware 143, the API 145, or the application programs 147). Furthermore, the kernel 141 may provide an interface through which the middleware 143, the API 145, or the application programs 147 may access the individual elements of the electronic device 101 to control or manage the system resources.

The middleware 143, for example, may function as an intermediary for allowing the API 145 or the application programs 147 to communicate with the kernel 141 to exchange data.

In addition, the middleware 143 may process one or more operation requests received from the application program 147 according to priority. For example, the middleware 143 may give priority to use the system resources of the electronic device 101 (for example, the bus 110, the processor 120, the memory 130, and the like) to at least one of the application programs 147. For example, the middleware 143 may perform scheduling or load balancing with respect to the one or more operation requests by processing the one or more operation requests according to the priority given to the at least one application program.

The API 145 is an interface through which the applications 147 control functions provided from the kernel 141 or the middleware 143, and may include, for example, at least one interface or function (e.g., instruction) for file control, window control, image processing, or text control.

The input/output interface 150, for example, may include various input/output circuitry configured to function as an interface that may transfer instructions or data input from a user or another external device to the other element(s) of the electronic device 101. Furthermore, the input/output interface 150 may output the instructions or data received from the other element(s) of the electronic device 101 to the user or another external device.

The display 160 may include, for example, a Liquid Crystal Display (LCD), a Light Emitting Diode (LED) display, an Organic Light Emitting Diode (OLED) display, a Micro Electro Mechanical System (MEMS) display, or an electronic paper display, or the like, but is not limited thereto. The display 160, for example, may display various types of content (e.g., text, images, videos, icons, or symbols) for the user. The display 160 may include a touch screen and receive, for example, a touch, gesture, proximity, or hovering input using an electronic pen or the user's body part.

The communication interface 170, for example, may include various communication circuitry configured to set communication between the electronic device 101 and an external device (e.g., the first external electronic device 102, the second external electronic device 104, or a server 106). For example, the communication interface 170 may be connected to a network 162 through wireless or wired communication to communicate with the external device (e.g., the second external electronic device 104 or the server 106).

The wireless communication may use at least one of, for example, Long Term Evolution (LTE), LTE-Advance (LTE-A), Code Division Multiple Access (CDMA), Wideband CDMA (WCDMA), Universal Mobile Telecommunications System (UMTS), WiBro (Wireless Broadband), and Global System for Mobile Communications (GSM), as a cellular communication protocol. In addition, the wireless communication may include, for example, short range communication 164. The short-range communication 164 may be performed by using at least one of, for example, Wi-Fi, Bluetooth, Bluetooth low energy (BLE), Near Field Communication (NFC), and Global Navigation Satellite System (GNSS). The GNSS may include at least one of, for example, a Global Positioning System (GPS), a Global Navigation Satellite System (Glonass), a Beidou Navigation Satellite System (hereinafter referred to as "Beidou"), and a European Global Satellite-based Navigation System (Galileo), according to a use area, a bandwidth, or the like. Hereinafter, in the present disclosure, the "GPS" may be interchangeably used with the "GNSS". The wired communication may include at least one of, for example, a Universal Serial Bus (USB), a High Definition Multimedia Interface (HDMI), Recommended Standard 232 (RS-232), and a Plain Old Telephone Service (POTS). The network 162 may include at least one of a communication network such as a computer network (e.g., a LAN or a WAN), the Internet, and a telephone network.

Each of the first and second external electronic apparatuses 102 and 104 may be of a type identical to or different from that of the electronic apparatus 101. According to an embodiment, the server 106 may include a group of one or more servers. According to various embodiments, all or some of the operations performed in the electronic device 101 may be performed in another electronic device or a plurality of electronic devices (e.g., the electronic devices 102 and104 or the server 106). According to an embodiment, when the electronic device 101 has to perform some functions or services automatically or in response to a request, the electronic device 101 may make a request for performing at least some functions relating thereto to another device (e.g., the electronic device 102 or 104 or the server 106) instead of performing the functions or services by itself or in addition. Another electronic apparatus may execute the requested functions or the additional functions, and may deliver a result of the execution to the electronic apparatus 101. The electronic device 101 may process the received result as it is or additionally to provide the requested functions or services. To achieve this, for example, cloud computing, distributed computing, or client-server computing technology may be used.

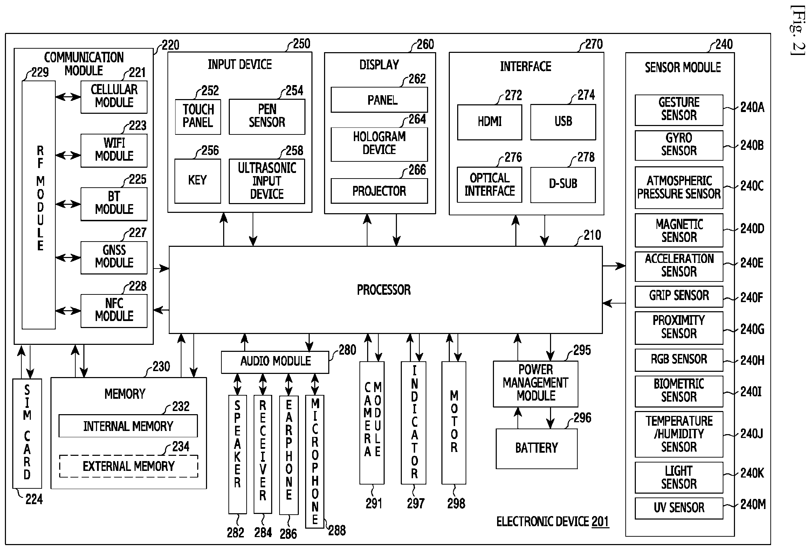

FIG. 2 is a block diagram illustrating an example electronic device according to various example embodiments of the present disclosure.

FIG. 2 is a block diagram of illustrating an example electronic device 201 according to various example embodiments. For example, the electronic apparatus 201 may include the whole or part of the electronic apparatus 101 illustrated in FIG. 1. The electronic device 201 may include at least one processor (e.g., Application Processor (AP)) (e.g., including processing circuitry) 210, a communication module (e.g., including communication circuitry) 220, a Subscriber Identification Module (SIM) 224, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The processor 210 may include various processing circuitry configure dto control a plurality of hardware or software components connected to the processor 210 by driving an operating system or an application program and perform processing of various pieces of data and calculations. The processor 210 may be implemented by, for example, a System on Chip (SoC). According to an example embodiment, the processor 210 may further include a Graphic Processing Unit (GPU) and/or an image signal processor. The processor 210 may include at least some (e.g., a cellular module 221) of the elements illustrated in FIG. 2. The processor 210 may load, into a volatile memory, instructions or data received from at least one (e.g., a non-volatile memory) of the other elements and may process the loaded instructions or data, and may store various data in a non-volatile memory.

The communication module 220 may have a configuration equal or similar to that of the communication interface 170 of FIG. 1. The communication module 220 may include various communication circuitry, such as, for example, and without limitation, the cellular module 221, a Wi-Fi module 223, a Bluetooth (BT) module 225, a GNSS module 227 (e.g., a GPS module, a Glonass module, a Beidou module, or a Galileo module), an NFC module 228, and a Radio Frequency (RF) module 229.

The cellular module 221 may provide a voice call, image call, a text message service, or an Internet service through, for example, a communication network. According to an embodiment, the cellular module 221 may distinguish between and authenticate electronic devices 201 within a communication network using a subscriber identification module (for example, the SIM card 224). According to an embodiment of the present disclosure, the cellular module 221 may perform at least some of the functions that the processor 210 may provide. According to an embodiment, the cellular module 221 may include a Communication Processor (CP).

Each of the Wi-Fi module 223, the BT module 225, the GNSS module 227, and the NFC module 228 may include, for example, a processor for processing data transmitted and received through the relevant module. According to some embodiments of the present disclosure, at least some (e.g., two or more) of the cellular module 221, the Wi-Fi module 223, the BT module 225, the GNSS module 227, and the NFC module 228 may be included in one Integrated Chip (IC) or IC package.

The RF module 229 may transmit/receive, for example, a communication signal (for example, an RF signal). The RF module 229 may include, for example, a transceiver, a Power Amplifier Module (PAM), a frequency filter, a Low Noise Amplifier (LNA), and an antenna. According to another embodiment of the present disclosure, at least one of the cellular module 221, the Wi-Fi module 223, the BT module 225, the GNSS module 227, and the NFC module 228 may transmit and receive RF signals through a separate RF module.

The subscriber identification module 224 may include, for example, a card including a subscriber identity module and/or an embedded SIM, and may contain unique identification information (e.g., an Integrated Circuit Card Identifier (ICCID)) or subscriber information (e.g., an International Mobile Subscriber Identity (IMSI)).

The memory 230 (for example, the memory 130) may include, for example, an internal memory 232 and/or an external memory 234. The embedded memory 232 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (for example, a NAND flash memory or a NOR flash memory), a hard disc drive, a Solid State Drive (SSD), and the like).

The external memory 234 may further include a flash drive, for example, a Compact Flash (CF), a Secure Digital (SD), a Micro Secure Digital (Micro-SD), a Mini Secure Digital (Mini-SD), an eXtreme Digital (xD), a memory stick, or the like. The external memory 234 may be functionally and/or physically connected to the electronic apparatus 201 through various interfaces.

The sensor module 240 may measure a physical quantity or detect an operation state of the electronic device 201, and may convert the measured or detected information into an electrical signal. For example, the sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a Red/Green/Blue (RGB) sensor), a biometric sensor 2401, a temperature/humidity sensor 240J, a light sensor 240K, and an Ultra Violet (UV) sensor 240M. Additionally or alternatively, the sensor module 240 may include, for example, an E-nose sensor, an electromyography (EMG) sensor, an electroencephalogram (EEG) sensor, an electrocardiogram (ECG) sensor, an Infrared (IR) sensor, an iris sensor, and/or a fingerprint sensor. The sensor module 240 may further include a control circuit for controlling one or more sensors included therein. In some embodiments of the present disclosure, the electronic apparatus 201 may further include a processor configured to control the sensor module 240 as a part of or separately from the processor 210, and may control the sensor module 240 while the processor 210 is in a sleep state.

The input device 250 may include various input circuitry, such as, for example, and without limitation, a touch panel 252, a (digital) pen sensor 254, a key 256, or an ultrasonic input device 258. The touch panel 252 may use at least one of, for example, a capacitive type, a resistive type, an infrared type, and an ultrasonic type. Also, the touch panel 252 may further include a control circuit. The touch panel 252 may further include a tactile layer and provide a tactile reaction to the user.

The (digital) pen sensor 254 may include, for example, a recognition sheet which is a part of the touch panel or is separated from the touch panel. The key 256 may include, for example, a physical button, an optical key or a keypad. The ultrasonic input device 258 may detect ultrasonic wavers generated by an input tool through a microphone (for example, a microphone 288) and identify data corresponding to the detected ultrasonic waves.

The display 260 (for example, the display 160) may include a panel 262, a hologram device 264 or a projector 266. The panel 262 may include a configuration that is identical or similar to the display 160 illustrated in FIG. 1. The panel 262 may be implemented to be, for example, flexible, transparent, or wearable. The panel 262 and the touch panel 252 may be implemented as one module. The hologram 264 may show a three dimensional image in the air by using an interference of light. The projector 266 may display an image by projecting light onto a screen. The screen may be located, for example, inside or outside the electronic apparatus 201. According to an embodiment, the display 260 may further include a control circuit for controlling the panel 262, the hologram device 264, or the projector 266.

The interface 270 may include various interface circuitry, such as, for example, and without limitation, a High-Definition Multimedia Interface (HDMI) 272, a Universal Serial Bus (USB) 274, an optical interface 276, or a D-subminiature (D-sub) 278. The interface 270 may be included in, for example, the communication interface 170 illustrated in FIG. 1. Additionally or alternatively, the interface 270 may include, for example, a Mobile High-definition Link (MHL) interface, a Secure Digital (SD) card/ Multi-Media Card (MMC) interface, or an Infrared Data Association (IrDA) standard interface.

The audio module 280 may bilaterally convert, for example, a sound and an electrical signal. At least some elements of the audio module 280 may be included in, for example, the input/output interface 145 illustrated in FIG. 1. The audio module 280 may process sound information which is input or output through, for example, a speaker 282, a receiver 284, earphones 286, the microphone 288 or the like.

The camera module 291 is a device which may photograph a still image and a dynamic image. According to an embodiment, the camera module 291 may include one or more image sensors (for example, a front sensor or a back sensor), a lens, an Image Signal Processor (ISP) or a flash (for example, LED or xenon lamp).

The power management module 295 may manage, for example, power of the electronic device 201. According to an embodiment, the power management module 295 may include a Power Management Integrated Circuit (PMIC), a charger Integrated Circuit (IC), or a battery or fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery gauge may measure, for example, a residual quantity of the battery 296, and a voltage, a current, or a temperature during the charging. The battery 296 may include, for example, a rechargeable battery or a solar battery.

The indicator 297 may display a particular state (e.g., a booting state, a message state, a charging state, or the like) of the electronic apparatus 201 or a part (e.g., the processor 210). The motor 298 may convert an electrical signal into mechanical vibration, and may generate vibration, a haptic effect, or the like. Although not illustrated, the electronic apparatus 201 may include a processing unit (e.g., a GPU) for supporting a mobile television (TV). The processing unit for supporting mobile TV may, for example, process media data according to a certain standard such as Digital Multimedia Broadcasting (DMB), Digital Video Broadcasting (DVB), or mediaFLO™.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

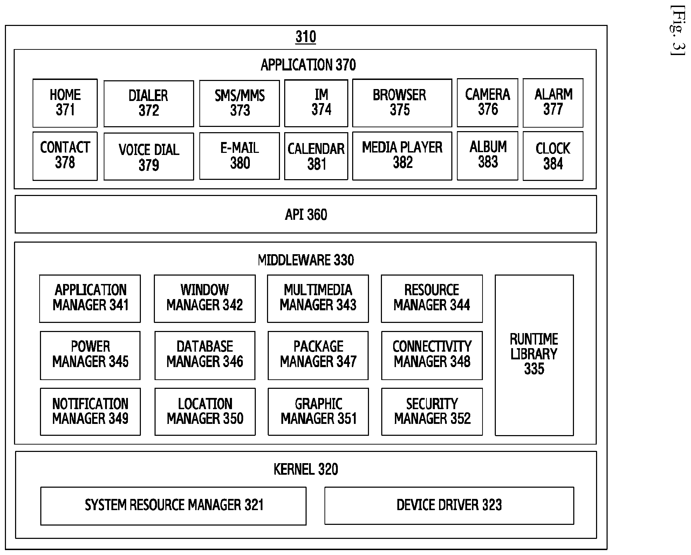

FIG. 3 is a block diagram illustrating an example program module according to various example embodiments of the present disclosure.

According to an embodiment, the program module 310 (for example, the program 140) may include an Operating System (OS) for controlling resources related to the electronic device (for example, the electronic device 101) and/or various applications (for example, the application programs 147) executed in the operating system. The operating system may be, for example, Android, iOS, Windows, Symbian, Tizen, Bada, or the like.

The program module 310 may include a kernel 320, middleware 330, an API 360, and/or an application 370. At least some of the program module 310 may be preloaded on the electronic apparatus, or may be downloaded from an external electronic apparatus (e.g., the electronic apparatus 102 or 104, or the server 106).

The kernel 320 (e.g., the kernel 141) may include, for example, a system resource manager 321 and/or a device driver 323. The system resource manager 321 may perform the control, allocation, retrieval, or the like of system resources. According to an embodiment of the present disclosure, the system resource manager 321 may include a process manager, a memory manager, a file system manager, or the like. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may provide a function required by the applications 370 in common or provide various functions to the applications 370 through the API 360 so that the applications 370 can efficiently use limited system resources within the electronic device. According to an embodiment, the middleware 330 (for example, the middleware 143) may include, for example, at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include a library module that a compiler uses in order to add a new function through a programming language while the applications 370 are being executed. The runtime library 335 may perform input/output management, memory management, the functionality for an arithmetic function, or the like.

The application manager 341 may manage, for example, the life cycle of at least one of the applications 370. The window manager 342 may manage Graphical User Interface (GUI) resources used for the screen. The multimedia manager 343 may determine a format required to reproduce various media files, and may encode or decode a media file by using a coder/decoder (codec) appropriate for the relevant format. The resource manager 344 may manage resources, such as a source code, a memory, a storage space, and the like of at least one of the applications 370.

The power manager 345 may operate together with a Basic Input/Output System (BIOS) to manage a battery or power and may provide power information required for the operation of the electronic device. The database manager 346 may generate, search for, and/or change a database to be used by at least one of the applications 370. The package manager 347 may manage the installation or update of an application distributed in the form of a package file.

The connectivity manager 348 may manage a wireless connection such as, for example, Wi-Fi or Bluetooth. The notification manager 349 may display or notify of an event, such as an arrival message, an appointment, a proximity notification, and the like, in such a manner as not to disturb the user. The location manager 350 may manage location information of the electronic apparatus. The graphic manager 351 may manage a graphic effect, which is to be provided to the user, or a user interface related to the graphic effect. The security manager 352 may provide various security functions required for system security, user authentication, and the like. According to an embodiment of the present disclosure, when the electronic apparatus (e.g., the electronic apparatus 101) has a telephone call function, the middleware 330 may further include a telephony manager for managing a voice call function or a video call function of the electronic apparatus.

The middleware 330 may include a middleware module that forms a combination of various functions of the above-described elements. The middleware 330 may provide a module specialized for each type of OS in order to provide a differentiated function. Also, the middleware 330 may dynamically delete some of the existing elements, or may add new elements.

The API 360 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 370 (for example, the application program 147) may include, for example, one or more applications which can provide functions such as home 371, dialer 372, SMS/MMS 373, Instant Message (IM) 374, browser 375, camera 376, alarm 377, contact 378, voice dial 379, email 380, calendar 381, media player 382, album 383, clock 384, health care (for example, measure exercise quantity or blood sugar), or environment information (for example, atmospheric pressure, humidity, or temperature information).

According to an embodiment of the present disclosure, the applications 370 may include an application (hereinafter, referred to as an "information exchange application" for convenience of description) supporting information exchange between the electronic apparatus (e.g., the electronic apparatus 101) and an external electronic apparatus (e.g., the electronic apparatus 102 or 104). The application associated with information exchange may include, for example, a notification relay application for forwarding specific information to an external electronic device, or a device management application for managing an external electronic device.

For example, the notification relay application may include a function of delivering, to the external electronic apparatus (e.g., the electronic apparatus 102 or 104), notification information generated by other applications (e.g., an SMS/MMS application, an email application, a health care application, an environmental information application, etc.) of the electronic apparatus 101. Further, the notification relay application may receive notification information from, for example, an external electronic device and provide the received notification information to a user.

The device management application may manage (for example, install, delete, or update), for example, a function for at least a part of the external electronic device (for example, the electronic device 102 or 104) communicating with the electronic device (for example, turning on/off the external electronic device itself (or some elements thereof) or adjusting brightness (or resolution) of a display), applications executed in the external electronic device, or services provided from the external electronic device (for example, a telephone call service or a message service).

According to an embodiment, the applications 370 may include applications (for example, a health care application of a mobile medical appliance or the like) designated according to attributes of the external electronic device 102 or 104. According to an embodiment of the present disclosure, the application 370 may include an application received from the external electronic apparatus (e.g., the server 106, or the electronic apparatus 102 or 104). According to an embodiment of the present disclosure, the application 370 may include a preloaded application or a third party application which can be downloaded from the server. Names of the elements of the program module 310, according to the above-described embodiments of the present disclosure, may change depending on the type of OS.

According to various embodiments of the present disclosure, at least some of the program module 310 may be implemented in software, firmware, hardware, or a combination of two or more thereof. At least some of the program module 310 may be implemented (e.g., executed) by, for example, the processor (e.g., the processor 210). At least some of the program module 310 may include, for example, a module, a program, a routine, a set of instructions, and/or a process for performing one or more functions.

The term "module" as used herein may, for example, refer to a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module' may be a minimum unit for performing one or more functions or a part thereof. The "module" may be mechanically or electronically implemented. For example, the "module" according to the present disclosure may include at least one of a dedicated processor, a CPU, an Application-Specific Integrated Circuit (ASIC) chip, a Field-Programmable Gate Array (FPGA), and a programmable-logic device for performing operations which has been known or are to be developed hereinafter.

According to various example embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

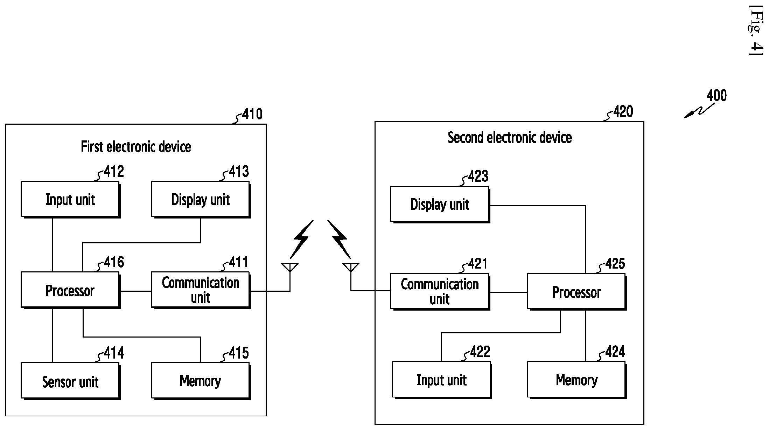

FIG. 4 is a block diagram illustrating an example communication system according to an example embodiment of the present disclosure.

Referring to FIG. 4 according to an example embodiment, the communication system 400 according to the present disclosure may include a first electronic device 410 and a second electronic device 420. The first electronic device 410 and the second electronic device 420 may be different kinds of devices, or the first electronic device 410 and the second electronic device 420 may be the same or similar kind of devices. The first electronic device 410 and the second electronic device 420 may be connected to communicate with each other.

The first electronic device 410 may operate with mobility. For example, the first electronic device 410 may be carried by a user. According to various example embodiments, the first electronic device 410 may include a communication unit (e.g., including communication circuitry) 411, an input unit (e.g., including input circuitry) 412, a display unit (e.g., including a display) 413, a sensor unit (e.g., including at least one sensor) 414, a memory 415, and a processor (e.g., including processing circuitry) 416.

The communication unit 411 may include various communication circuitry configured to perform communication in the first electronic device 410. For example, the communication unit 411 may communicate with an external device using various communication methods. For example, the communication unit 411 may perform wire-based or wireless communication. To this end, the communication unit 411 may include at least one antenna. The communication unit 411 may connect to at least one of a mobile communication network and a data communication network. Further, the communication unit 411 may perform short-range communication. The external device may include, for example, at least one of an electronic device, a base station, a server, and a satellite. According to various example embodiments, the external device may include the second electronic device 420. The communication methods may include, for example, and without limitation, Long Term Evolution (LTE), Wideband Code Division Multiple Access (WCDMA), Global System For Mobile communications (GSM), Wireless Fidelity (WiFi), wireless Local Area Network (wireless LAN), Bluetooth, and Near Field Communications (NFC).

The input unit 412 may include various input circuitry configured to generate input data in the first electronic device 410. For example, the input unit 412 may include various input circuitry, such as, for example, and without limitation at least one of a key pad, a dome switch, a physical button, a touch panel, and a jog & shuttle.

The display unit 413 may output display data in the first electronic device 410. For example, the display unit 413 may include various displays, such as, for example, and without limitation, a Liquid Crystal Display (LCD), a Light Emitting Diode (LED) display, an Organic Light Emitting Diode (OLED) display, an Active Matrix Organic Light Emitting Diode (AMOLED) display, Micro Electro Mechanical Systems (MEMS), and an electronic paper display. The display 413 may be combined with the input unit 412 to be configured as a touch screen.

The sensor unit 414 may include various sensors that measure physical quantities around the first electronic device 410. Further, the sensor unit 414 may detect a state of the first electronic device 410. For example, the sensor unit 414 may detect a physical signal. In addition, the sensor unit 414 may convert a physical signal into an electrical signal. The sensor unit 414 may include at least one sensor. For example, the sensor unit 414 may include at least one of a gesture sensor, a gyro sensor, a barometric pressure sensor, a magnetic sensor, an accelerometer, a grip sensor, a proximity sensor, a color sensor (for example, a red, green, and blue (RGB) sensor), a biometric sensor, a temperature/humidity sensor, an illumination sensor, and an ultraviolet (UV) sensor, or the like, but is not limited thereto. The biometric sensor may include, for example, at least one of an E-nose sensor, an electromyography (EMG) sensor, an electroencephalogram (EEG) sensor, an electrocardiogram (ECG) sensor, an infrared (IR) sensor, an iris sensor, and a fingerprint sensor.

The memory 415 may store operation programs of the first electronic device 410. Further, the memory 415 may store data generated while the programs are implemented. Here, the memory 415 may store identification information on the first electronic device 410, which is first identification information. For example, the memory 415 may include at least one of an internal memory and an external memory. The internal memory may include at least one of a volatile memory (for example, a DRAM, an SRAM, an SDRAM, or the like) and a nonvolatile memory (for example, a one-time programmable ROM (OTPROM), a PROM, an EPROM, an EEPROM, a mask ROM, a flash ROM, a flash memory, a hard drive, or a solid state drive (SSD)). The external memory may include at least one of a flash drive, a compact flash (CF), a secure digital (SD), a micro-SD, a mini-SD, an extreme digital (xD), a multi-media card (MMC), a memory stick, and the like.

The processor 416 may include various processing circuitry configured to control overall operations in the first electronic device 410. Here, the processor 416 may perform various functions. To this end, the processor 416 may control components of the first electronic device 410. Further, the processor 416 may receive a command or data from the components of the first electronic device 410 and may process the command or data.

The second electronic device 420 may operate at a predetermined location. Also, the second electronic device 420 may operate with mobility. According to various example embodiments, the second electronic device 420 may include a communication unit (e.g., including communication circuitry) 421, an input unit (e.g., including input circuitry) 422, a display unit (e.g., including a display) 423, a memory 424, and a processor (e.g., including processing circuitry) 425.

The communication unit 421 may include various processing circuitry configured to perform communication in the second electronic device 420. For example, the communication unit 421 may communicate with an external device using various communication methods. For example, the communication unit 421 may perform wire-based or wireless communication. To this end, the communication unit 421 may include at least one antenna. The communication unit 421 may connect to at least one of a mobile communication network and a data communication network. Further, the communication unit 421 may perform short-range communication. The external device may include, for example, at least one of an electronic device, a base station, a server, and a satellite. According to various example embodiments, the external device may include the first electronic device 410. The communication methods may include Long Term Evolution (LTE), Wideband Code Division Multiple Access (WCDMA), Global System For Mobile communications (GSM), Wireless Fidelity (WiFi), wireless Local Area Network (wireless LAN), Bluetooth, and Near Field Communications (NFC).

The input unit 422 may include various input circuitry configured to generate input data in the second electronic device 420. For example, the input unit 422 may include various input circuitry, such as, for example, and without limitation, at least one of a key pad, a dome switch, a physical button, a touch panel, and a jog & shuttle.

The display unit 423 may output display data in the second electronic device 420. For example, the display unit 410 may include various displays, such as, for example, and without limitation, a Liquid Crystal Display (LCD), a Light Emitting Diode (LED) display, an Organic Light Emitting Diode (OLED) display, an Active Matrix Organic Light Emitting Diode (AMOLED) display, Micro Electro Mechanical Systems (MEMS), and an electronic paper display. The display unit 423 may be combined with the input unit 422 to be configured as a touch screen.

The memory 424 may store operation programs of the second electronic device 420. Further, the memory 424 may store data generated while the programs are implemented. Here, the memory 424 may store identification information on the second electronic device 420, which is second identification information. For example, the memory 424 may include at least one of an internal memory and an external memory. The internal memory may include at least one of a volatile memory (for example, a DRAM, an SRAM, an SDRAM, or the like) and a nonvolatile memory (for example, a one-time programmable ROM (OTPROM), a PROM, an EPROM, an EEPROM, a mask ROM, a flash ROM, a flash memory, a hard drive, or a solid state drive (SSD)). The external memory may include at least one of a flash drive, a compact flash (CF), a secure digital (SD), a micro-SD, a mini-SD, an extreme digital (xD), a multi-media card (MMC), a memory stick, and the like.

The processor 425 may include various processing circuitry configured to control overall operations in the second electronic device 420. Here, the processor 425 may perform various functions. To this end, the processor 425 may control components of the second electronic device 420. Further, the processor 425 may receive a command or data from the components of the second electronic device 420 and may process the command or data.

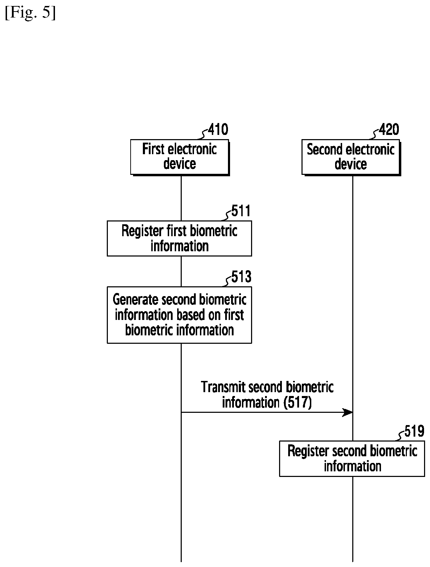

FIG. 5 is a flowchart illustrating an example method of registering biometric information in the communication system according to an example embodiment of the present disclosure.

Referring to FIG. 5 according to an example embodiment, the first electronic device 410 (for example, the processor 416) may register first biometric information in operation 511. The first electronic device 410 (for example, the processor 416) may acquire the first biometric information from the user. The first electronic device 410 (for example, the processor 416) may store the first biometric information corresponding to the user. According to an example embodiment, the first electronic device 410 (for example, the processor 416) may scan a fingerprint of the user to generate a fingerprint image. Further, the first electronic device 410 (for example, the processor 416) may extract at least one feature point from the fingerprint image. Accordingly, the first electronic device 410 (for example, the processor 416) may acquire at least one of the fingerprint image and the feature point of the fingerprint image as the first biometric information. Further, the first electronic device 410 (for example, the processor 416) may store at least one of the fingerprint image and the feature point of the fingerprint image as the first biometric information.

According to an example embodiment, the first electronic device 410 (for example, the processor 416) may set a right to access the first electronic device 410 (for example, the processor 416) corresponding to the first biometric information. For example, the first electronic device 410 (for example, the processor 416) may set a right to unlock the first electronic device 410 (for example, the processor 416) corresponding to the first biometric information. Further, the first electronic device 410 (for example, the processor 416) may set a right to implement a specific function corresponding to the first biometric information.

According to various example embodiments, in operation 513, the first electronic device 410 (for example, the processor 416) may generate second biometric information based on the first biometric information. For example, the first electronic device 410 (for example, the processor 416) may encode the first biometric information to generate the second biometric information. According to an example embodiment, the first electronic device 410 (for example, the processor 416) may encode at least one of the fingerprint image and the feature point of the fingerprint image. For example, the first electronic device 410 may store the second biometric image.

According to various example embodiments, in operation 517, the first electronic device 410 (for example, the processor 416) may transmit the second biometric information to the second electronic device 420. To this end, the first electronic device 410 (for example, the processor 416) may store the second identification information on the second electronic device 420. The first electronic device 410 (for example, the processor 416) may transmit the second biometric information to the second electronic device 420 based on a user selection. For example, the first electronic device 410 (for example, the processor 416) may transmit the second biometric information to the second electronic device 420 using a short-range communication method. Here, the first electronic device 410 (for example, the processor 416) may transmit the first identification information along with the second biometric information.

According to various example embodiments, in operation 519, the second electronic device 420 (for example, the processor 425) may register the second biometric information. For example, the second electronic device 420 (for example, the processor 425) may store the second biometric information corresponding to the user. Further, the second electronic device 420 (for example, the processor 425) may store the second biometric information corresponding to the first electronic device 410.

According to an example embodiment, the second electronic device 420 (for example, the processor 425) may set a right to access the second electronic device 420 (for example, the processor 425) corresponding to the second biometric information. For example, the second electronic device 420 (for example, the processor 425) may set a right to unlock the second electronic device 420 corresponding to the second biometric information. Also, the second electronic device 420 (for example, the processor 425) may set a right to implement a specific function corresponding to the second biometric information.

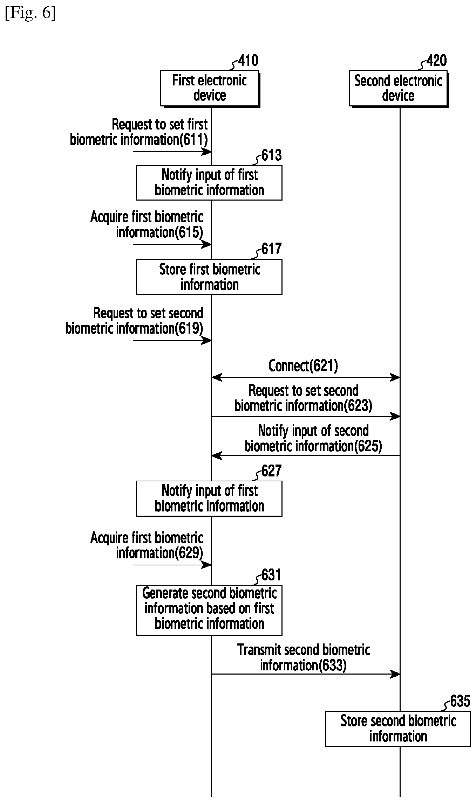

FIG. 6 is a flowchart illustrating an example method of registering biometric information in the communication system according to an example embodiment of the present disclosure.

Referring to FIG. 6 according to an example embodiment, in operation 611, the first electronic device 410 (for example, the processor 416) may detect a request to set first biometric information. For example, when the user makes the request to set the first biometric information in the first electronic device 410, the first electronic device 410 (for example, the processor 416) may detect the request. In operation 613, the first electronic device 410 (for example, the processor 416) may notify the user of the input of the first biometric information in response to the request to set the first biometric information. In operation 615, the first electronic device 410 (for example, the processor 416) may acquire the first biometric information on the user. In operation 617, the first electronic device 410 (for example, the processor 416) may store the first biometric information corresponding to the user.

According to various example embodiments, in operation 619, the first electronic device 410 (for example, the processor 416) may detect a request to set second biometric information. For example, when the user makes the request to set the second biometric information in the second electronic device 420, the first electronic device 410 (for example, the processor 416) may detect the request. In operation 621, the first electronic device 410 may perform a connection to the second electronic device 420 in response to the request to set the second biometric information. For example, the first electronic device 410 (for example, the processor 416) may perform a connection to the second electronic device 420 using a short-range communication method. To this end, the first electronic device 410 may store the second identification information on the second electronic device 420. The first electronic device 410 (for example, the processor 416) may perform a connection to the second electronic device 420 based on a user selection. In operation 623, the first electronic device 410 (for example, the processor 416) may transmit the request to set the second biometric information to the second electronic device 420. When the request to set the second biometric information is received from the first electronic device 410 in operation 623, the second electronic device 420 (for example, the processor 425) may notify the first electronic device 410 of the input of the second biometric information in operation 625.

According to various example embodiments, when the input of the second biometric information is notified from the second electronic device 420 in operation 625, the first electronic device 410 (for example, the processor 416) may notify the user the input of first biometric information in operation 627. The first electronic device 410 (for example, the processor 416) may display screen data indicating a request to input the first biometric information through the display unit 413 and may output audio data indicating a request to input the first biometric information through a speaker (not shown). In operation 629, the first electronic device 410 (for example, the processor 416) may acquire the first biometric information on the user. In operation 631, the first electronic device 410 (for example, the processor 416) may generate second biometric information based on the first biometric information. For example, the first electronic device 410 (for example, the processor 416) may encode the first biometric information to generate the second biometric information. For example, the first electronic device 410 may store the second biometric information. In operation 633, the first electronic device 410 (for example, the processor 416) may transmit the second biometric information to the second electronic device 420. When the second biometric information is received from the first electronic device 410 in operation 633, the second electronic device 420 (for example, the processor 425) may store the second biometric information in operation 635.

This example embodiment of the present disclosure illustrates that the first electronic device 410 (for example, the processor 416) detects the request to set the second biometric information in the second electronic device 420, which is made by the user, but is not limited thereto. According to an example embodiment, the first electronic device 410 (for example, the processor 416) may receive the request to set the second biometric information from the second electronic device 420 and may operate.

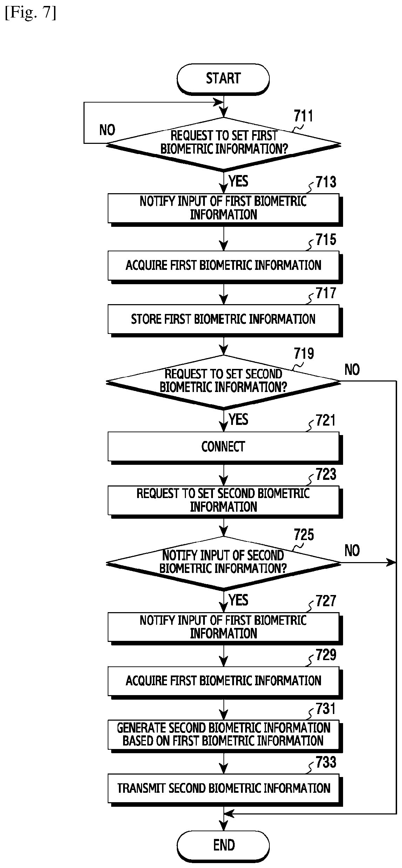

FIG. 7 is a flowchart illustrating an example method of operating the first electronic device according to an example embodiment of the present disclosure.

Referring to FIG. 7 according to an example embodiment, the processor 416 may detect a request to set first biometric information in operation 711. For example, when the user makes the request to set the first biometric information in the first electronic device 410, the processor 416 may detect the request. For example, the processor 416 may detect the request to set the first biometric information through the input unit 412 or the sensor unit 414.

In operation 713, the processor 416 may notify the user of the input of the first biometric information. The processor 416 may notify the user of the input of the first biometric information using screen data or audio data. For example, the processor 416 may output a notification message for the input of the first biometric information through the display unit 413.

In operation 715, the processor 416 may acquire the first biometric information of the user. To this end, the processor 416 may temporarily turn on the biometric sensor of the sensor unit 414. For example, the biometric sensor may include at least one of an E-nose sensor, an electromyography (EMG) sensor, an electroencephalogram (EEG) sensor, an electrocardiogram (ECG) sensor, an infrared (IR) sensor, an iris sensor, and a fingerprint sensor. The processor 416 may acquire the first biometric information using the biometric sensor. According to an example embodiment, the processor 416 may scan a fingerprint of the user to generate a fingerprint image. Further, the processor 416 may extract at least one feature point from the fingerprint image. Accordingly, the processor 416 may acquire at least one of the fingerprint image and the feature point of the fingerprint image as the first biometric information.

In operation 717, the processor 416 may store the first biometric information corresponding to the user. For example, the processor 416 may store, in the memory 415, at least one of the fingerprint image and the feature point of the fingerprint image as the first biometric information. For example, the processor 416 may set a right to access the first electronic device 410 corresponding to the first biometric information. According to an example embodiment, the processor 416 may set a right to unlock the first electronic device 410 corresponding to the first biometric information. Further, the processor 416 may set a right to implement a specific function corresponding to the first biometric information.

In operation 719, the processor 416 may detect a request to set second biometric information. For example, when the user makes the request to set the second biometric information in the second electronic device 420, the processor 416 may detect the request. For example, the processor 416 may detect the request to set the second biometric information through the input unit 412 or the sensor unit 414.

In operation 721, the processor 416 may perform a connection to the second electronic device 420. For example, the processor 416 may perform a connection to the second electronic device 420 using a short-range communication method. The processor 416 may transmit a connection request to the second electronic device 420. The processor 416 may receive a connection response from the second electronic device 420. When the connection response from the second electronic device 420 is positive, the processor 416 may complete a connection to the second electronic device 420. To this end, the second identification information on the second electronic device 420 may be stored in the memory 415. Further, the processor 416 may perform a connection to the second electronic device 420 based on a user selection. According to an example embodiment, the processor 416 may retrieve a peripheral. For example, when the second electronic device 420 is retrieved, the processor 416 may perform a connection to the second electronic device 420. Also, the processor 416 may perform a connection to the second electronic device 420 based on a user selection. In operation 723, the processor 416 may transmit the request to set the second biometric information in the second electronic device 420.

In operation 725, when the input of second biometric information is notified from the second electronic device 420, the processor 416 may detect the notification. In operation 727, the processor 416 may notify the user of the input of the first biometric information in response to the notification of the input of the second biometric information. The processor 416 may use screen data or audio data to notify the user of the input of the first biometric information. For example, the processor 416 may output, through the display unit 413, a notification message for the input of the first biometric information.

In operation 729, the processor 416 may acquire first biometric information on the user. To this end, the processor 416 may temporarily turn on the biometric sensor of the sensor unit 414. According to an example embodiment, the processor 416 may scan a fingerprint of the user to generate a fingerprint image. Further, the processor 416 may extract at least one feature point from the fingerprint image. Accordingly, the processor 416 may acquire at least one of the fingerprint image and the feature point of the fingerprint image as the first biometric information.

In operation 731, the processor 416 may generate second biometric information based on the first biometric information. For example, the processor 416 may compare the first biometric information with the first biometric information stored in operation 717. When the first biometric information is the same as the first biometric information stored in operation 717, the processor 416 may generate the second biometric information. For example, the processor 416 may encode the first biometric information to generate the second biometric information. For example, the processor 416 may encode at least one of the fingerprint image and the feature point of the fingerprint image. In operation 733, the processor 416 may transmit the second biometric information to the second electronic device 420.

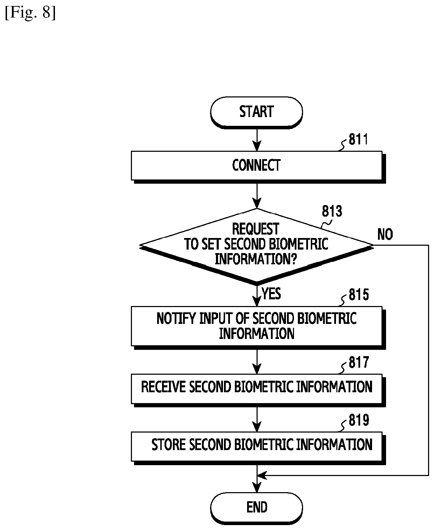

FIG. 8 is a flowchart illustrating an example method of operating the second electronic device according to an example embodiment of the present disclosure.

Referring to FIG. 8 according to an example embodiment, the processor 425 may perform a connection to the first electronic device 410 in operation 811. For example, the processor 425 may perform a connection to the first electronic device 410 using a short-range communication method. When a connection request is received from the first electronic device 410, the processor 425 may determine whether to connect to the first electronic device 410. The processor 425 may transmit a connection response regarding whether to connect to the first electronic device 410. When the connection response is positive, the processor 425 may complete a connection to the first electronic device 410.

In operation 813, the processor 425 may detect a request to set second biometric information. For example, when the request to set the second biometric information is received from the first electronic device 410, the processor 425 may detect the request. For example, the processor 425 may detect the request to set the second biometric information through the communication unit 421. In operation 815, the processor 425 may notify the first electronic device 410 of the input of the second biometric information.

In operation 817, the processor 425 may receive the second biometric information from the first electronic device 410. In operation 819, the processor 425 may store the second biometric information. For example, the processor 425 may store the second biometric information corresponding to the user. Also, the processor 425 may store the second biometric information corresponding to the first electronic device 410. According to an example embodiment, the processor 425 may set a right to access the second electronic device 420 corresponding to the second biometric information. For example, the processor 425 may set a right to unlock the second electronic device 420 corresponding to the second biometric information. Also, the processor 425 may set a right to implement a specific function corresponding to the second biometric information.

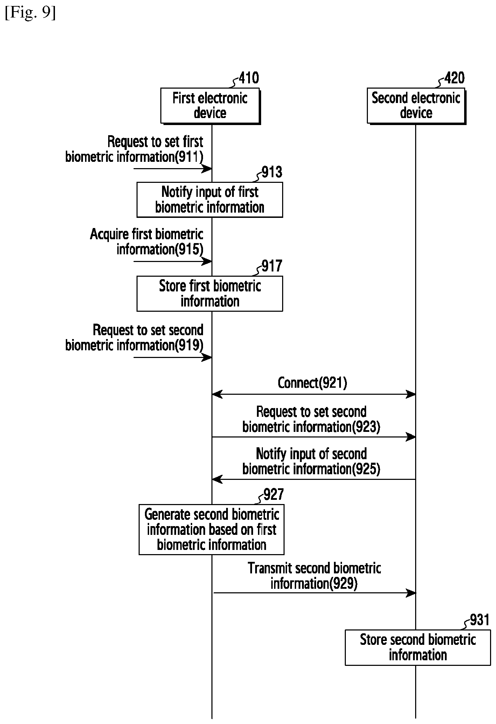

FIG. 9 is a flowchart illustrating an example method of registering biometric information in the communication system according to another example embodiment of the present disclosure.

Referring to FIG. 9 according to the example embodiment, in operation 911, the first electronic device 410 (for example, the processor 416) may detect a request to set first biometric information. For example, when the user makes the request to set the first biometric information in the first electronic device 410, the first electronic device 410 (for example, the processor 416) may detect the request. In operation 913, the first electronic device 410 (for example, the processor 416) may notify the user of the input of the first biometric information in response to the request. In operation 915, the first electronic device 410 (for example, the processor 416) may acquire the first biometric information of the user. In operation 917, the first electronic device 410 (for example, the processor 416) may store the first biometric information corresponding to the user.

According to various example embodiments, in operation 919, the first electronic device 410 (for example, the processor 416) may detect a request to set second biometric information. For example, when the user makes the request to set the second biometric information in the second electronic device 420, the first electronic device 410 (for example, the processor 416) may detect the request. In operation 921, the first electronic device 410 (for example, the processor 416) may perform a connection to the second electronic device 420 in response to the request. For example, the first electronic device 410 may perform a connection to the second electronic device 420 using a short-range communication method. To this end, the first electronic device 410 may store the second identification information on the second electronic device 420. The first electronic device 410 (for example, the processor 416) may perform a connection to the second electronic device 420 based on a user selection. In operation 923, the first electronic device 410 (for example, the processor 416) may transmit the request to set the second biometric information to the second electronic device 420. When the request to set the second biometric information is received from the first electronic device 410 in operation 923, the second electronic device 420 (for example, the processor 425) may notify the first electronic device 410 of the input of the second biometric information in operation 925.

According to various example embodiments, in operation 927, the first electronic device 410 (for example, the processor 416) may generate second biometric information based on the first biometric information. The first electronic device 410 (for example, the processor 416) may generate the second biometric information based on the first biometric information stored in operation 917. For example, the first electronic device 410 (for example, the processor 416) may encode the first biometric information to generate the second biometric information. For example, the first electronic device 410 may store the second biometric information. In operation 929, the first electronic device 410 (for example, the processor 416) may transmit the second biometric information to the second electronic device 420. When the second biometric information is received from the first electronic device 410 in operation 929, the second electronic device 420 (for example, the processor 425) may store the second biometric information in operation 931.

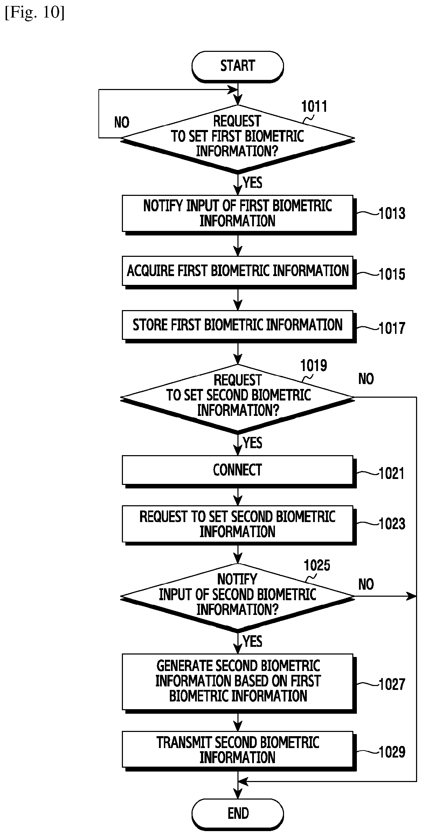

FIG. 10 is a flowchart illustrating an example method of operating the first electronic device according to another exemplary embodiment of the present disclosure.

Referring to FIG. 10 according to an example embodiment, the processor 416 may detect a request to set first biometric information in operation 1011. For example, when the user makes the request to set the first biometric information in the first electronic device 410, the processor 416 may detect the request. For example, the processor 416 may detect the request to set the first biometric information through the input unit 412 or the sensor unit 414.

In operation 1013, the processor 416 may notify the user of the input of the first biometric information. The processor 416 may notify the user of the input of the first biometric information using screen data or audio data. For example, the processor 416 may output a notification message for the input of the first biometric information through the display unit 413.

In operation 1015, the processor 416 may acquire the first biometric information of the user. To this end, the processor 416 may temporarily turn on the biometric sensor of the sensor unit 414. For example, the biometric sensor may include at least one of an E-nose sensor, an electromyography (EMG) sensor, an electroencephalogram (EEG) sensor, an electrocardiogram (ECG) sensor, an infrared (IR) sensor, an iris sensor, and a fingerprint sensor. The processor 416 may acquire the first biometric information using the biometric sensor. According to an example embodiment, the processor 416 may scan a fingerprint of the user to generate a fingerprint image. Further, the processor 416 may extract at least one feature point from the fingerprint image. Accordingly, the processor 416 may acquire at least one of the fingerprint image and the feature point of the fingerprint image as the first biometric information.

In operation 1017, the processor 416 may store the first biometric information corresponding to the user. For example, the processor 416 may store, in the memory 415, at least one of the fingerprint image and the feature point of the fingerprint image as the first biometric information. For example, the processor 416 may set a right to access the first electronic device 410 corresponding to the first biometric information. According to one exemplary embodiment, the processor 416 may set a right to unlock the first electronic device 410 corresponding to the first biometric information. Further, the processor 416 may set a right to implement a specific function corresponding to the first biometric information.

In operation 1019, the processor 416 may detect a request to set second biometric information. For example, when the user makes the request to set the second biometric information in the second electronic device 420, the processor 416 may detect the request. For example, the processor 416 may detect the request to set the second biometric information through the input unit 412 or the sensor unit 414.

In operation 1021, the processor 416 may perform a connection to the second electronic device 420. For example, the processor 416 may perform a connection to the second electronic device 420 using a short-range communication method. The processor 416 may transmit a connection request to the second electronic device 420. The processor 416 may receive a connection response from the second electronic device 420. When the connection response from the second electronic device 420 is positive, the processor 416 may complete the connection to the second electronic device 420. To this end, the second identification information on the second electronic device 420 may be stored in the memory 415. Further, the processor 416 may perform connection to the second electronic device 420 based on a user selection. According to an example embodiment, the processor 416 may retrieve a peripheral. For example, when the second electronic device 420 is retrieved, the processor 416 may perform a connection to the second electronic device 420. Also, the processor 416 may perform a connection to the second electronic device 420 based on a user selection. In operation 1023, the processor 416 may transmit the request to set the second biometric information in the second electronic device 420.

In operation 1025, when the input of second biometric information is notified from the second electronic device 420, the processor 416 may detect the notification. In operation 1027, the processor 416 may generate second biometric information based on the first biometric information in response to the notification. The processor 416 may generate the second biometric information based on the first biometric information stored in operation 1017. For example, the first electronic device 410 may encode the first biometric information to generate the second biometric information. For example, the first electronic device 410 may encode at least one of the fingerprint image and the feature point of the fingerprint image. For example, the first electronic device 410 may store the second biometric information. In operation 1029, the processor 416 may transmit the second biometric information to the second electronic device 420.

FIG. 6 and FIG. 9 illustrate different methods for registering biometric information in the communication system, and FIG. 8 illustrates an example method of operating the second electronic device 420 illustrated in FIG. 6. A method of operating the second electronic device 420 illustrated in FIG. 9 is the same as or similar to the operating method of the second electronic device 420 illustrated in FIG. 8, and thus a detailed description thereof is omitted herein.

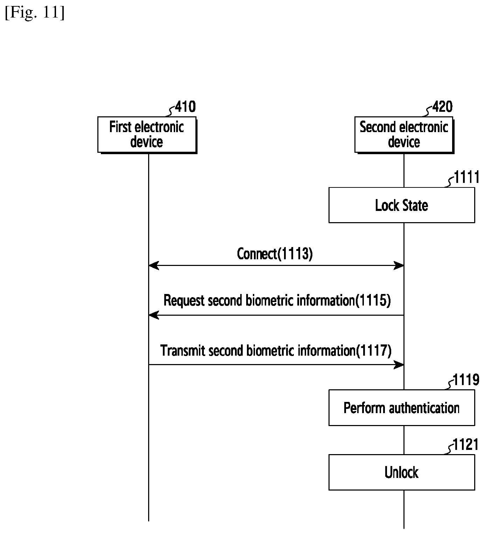

FIG. 11 is a flowchart illustrating an example method of performing authentication in the communication system according to an example embodiment of the present disclosure.

Referring to FIG. 11 according to an example embodiment, the second electronic device 420 (for example, the processor 425) may identify that the second electronic device 420 is in a locked state in operation 1111. According to an example embodiment, the locked state of the second electronic device 420 may refer to a state in which the second electronic device 420 is supplied with power but authentication information, for example, a password, is not input so that a right to access the second electronic device 420 and a right to implement a specific function are not allowed. For example, in the locked state, the second electronic device 420 (for example, the processor 425) may display an input notification screen on the display unit 423 of the second electronic device 420.

In operation 1113, the first electronic device 410 and the second electronic device 420 may perform connection. For example, the first electronic device 410 (for example, the processor 416) may perform connection to the second electronic device 420 using a short-range communication method. To this end, the first electronic device 410 may store the second identification information on the second electronic device 420. The first electronic device 410 (for example, the processor 416) may perform a connection to the second electronic device 420 based on a user selection. The second electronic device 420 (for example, the processor 425) may identify, using a communication method including Bluetooth Low Energy (BLE), that the first electronic device 410 is located within a threshold radius. When the first electronic device 410 is located within the threshold radius, the second electronic device 420 (for example, the processor 425) may perform a connection to the first electronic device 410.

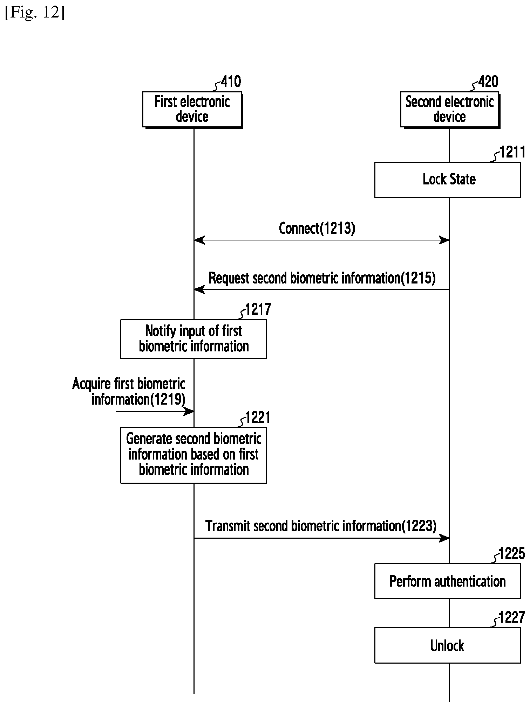

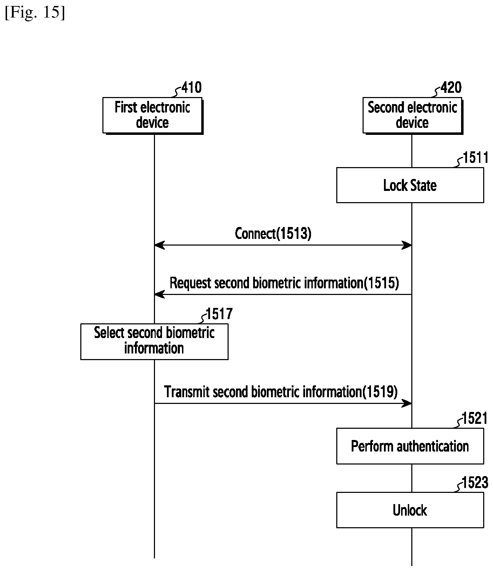

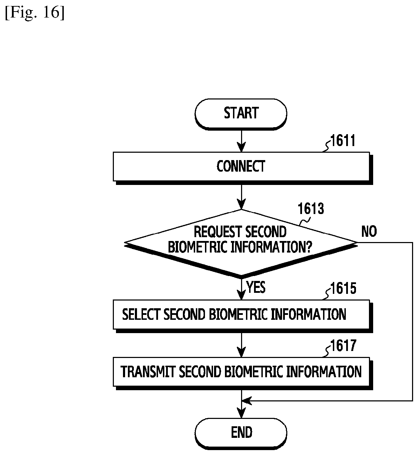

In operation 1115, the second electronic device 420 (for example, the processor 425) may transmit a request to receive second biometric information to the first electronic device 410. When the request for the second biometric information is received from the second electronic device 420 in operation 1115, the first electronic device 410 (for example, the processor 416) may transmit the second biometric information to the second electronic device 420 in operation 1117. In operation 1117, the first electronic device 410 (for example, the processor 416) may operate either in a manual mode or in an automatic mode. An example in which the first electronic device 410 (for example, the processor 416) transmits the second biometric information to the second electronic device 420 when the first electronic device 410 is in the manual mode will be described with reference to FIG. 12 to FIG. 14. An example in which the first electronic device 410 (for example, the processor 416) transmits the second biometric information to the second electronic device 420 when the first electronic device 410 is in the automatic mode will be described with reference to FIG. 15 and FIG. 16.

In operation 1119, the second electronic device 420 (for example, the processor 425) may perform authentication using the second biometric information received from the first electronic device 410. When the second biometric information received from the first electronic device 410 is the same as the second biometric information registered in operation 519 of FIG. 5, the second electronic device 420 (for example, the processor 425) may succeed in authentication using the second biometric information. When the authentication succeeds using the second biometric information, the second electronic device 420 (for example, the processor 425) may release the locked state of the second electronic device 420 in operation 1121. The second electronic device 420 (for example, the processor 425) may release the locked state to provide the user with the right to access the second electronic device 420 and the right to implement the specific function.

FIG. 12 is a flowchart illustrating an example method of performing authentication in the communication system according to an example embodiment of the present disclosure.

Referring to FIG. 12 according to an example embodiment, the second electronic device 420 (for example, the processor 425) may identify that the second electronic device 420 is in a locked state in operation 1211. According to an example embodiment, the locked state of the second electronic device 420 may refer to a state in which the second electronic device 420 is supplied with power but authentication information, for example, a password, is not input so that a right to access the second electronic device 420 and a right to implement a specific function is not allowed. For example, in the locked state, the second electronic device 420 (for example, the processor 425) may display an input notification screen on the display unit 423 of the second electronic device 420.

In operation 1213, the first electronic device 410 and the second electronic device 420 may perform connection. For example, the first electronic device 410 (for example, the processor 416) may perform a connection to the second electronic device 420 using a short-range communication method. To this end, the first electronic device 410 may store the second identification information on the second electronic device 420. The first electronic device 410 (for example, the processor 416) may perform a connection to the second electronic device 420 based on a user selection. The second electronic device 420 (for example, the processor 425) may identify, using a communication method including Bluetooth Low Energy (BLE), that the first electronic device 410 is located within a threshold radius. When the first electronic device 410 is located within the threshold radius, the second electronic device 420 (for example, the processor 425) may perform connection to the first electronic device 410.

In operation 1215, the second electronic device 420 (for example, the processor 425) may transmit a request to receive second biometric information to the first electronic device 410. When the request for the second biometric information is received from the second electronic device 420 in operation 1215, the first electronic device 410 (for example, the processor 416) may notify the user of the input of the first biometric information in operation 1217. The first electronic device 410 (for example, the processor 416) may display screen data indicating a request to input the first biometric information through the display unit 413 and may output audio data indicating a request to input the first biometric information through a speaker (not shown). In operation 1219, the first electronic device 410 (for example, the processor 416) may acquire the first biometric information on the user. In operation 1221, the first electronic device 410 (for example, the processor 416) may generate second biometric information based on the first biometric information. Here, the first electronic device 410 (for example, the processor 416) may encode the first biometric information to generate the second biometric information. In operation 1223, the first electronic device 410 (for example, the processor 416) may transmit the second biometric information to the second electronic device 420.

In operation 1225, the second electronic device 420 (for example, the processor 425) may perform authentication using the second biometric information received from the first electronic device 410. When the second biometric information received from the first electronic device 410 is the same as the second biometric information registered in operation 519 of FIG. 5, the second electronic device 420 (for example, the processor 425) may succeed in authentication using the second biometric information. When the authentication succeeds using the second biometric information, the second electronic device 420 (for example, the processor 425) may release the locked state of the second electronic device 420 in operation 1227. The second electronic device 420 (for example, the processor 425) may release the locked state to provide the user with the right to access the second electronic device 420 and the right to implement the specific function.

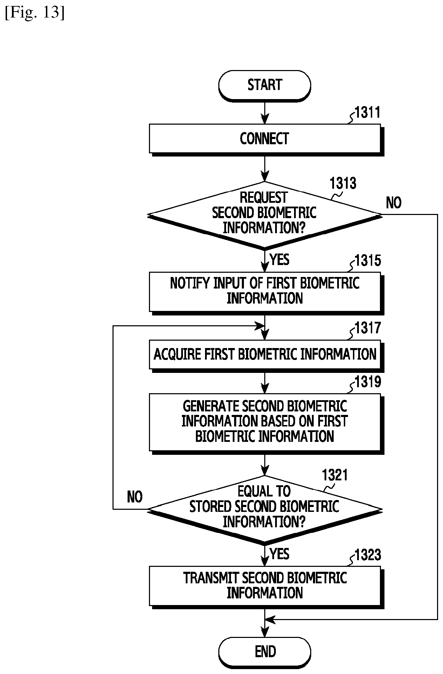

FIG. 13 is a flowchart illustrating an example method of operating the first electronic device according to an example embodiment of the present disclosure.

Referring to FIG. 13 according to an example embodiment, the processor 416 may perform a connection to the second electronic device 420 in operation 1311. For example, the processor 416 may perform a connection to the second electronic device 420 using a short-range communication method. The processor 416 may transmit a connection request to the second electronic device 420. The processor 416 may receive a connection response from the second electronic device 420. When the connection response from the second electronic device 420 is positive, the processor 416 may complete the connection to the second electronic device 420. To this end, the second identification information on the second electronic device 420 may be stored in the memory 415. Further, the processor 416 may perform a connection to the second electronic device 420 based on a user selection. According to an example embodiment, the processor 416 may retrieve a peripheral. For example, when the second electronic device 420 is retrieved, the processor 416 may perform a connection to the second electronic device 420. Also, the processor 416 may perform a connection to the second electronic device 420 based on a user selection.

In operation 1313, the processor 416 may detect a request for second biometric information. That is, when the second biometric information is requested from the second electronic device 420, operation 1315 may be performed. When no second biometric information is requested from the second electronic device 420 in operation 1313, the processor 416 may end the process.

In operation 1315, the processor 416 may notify the user of the input of first biometric information. The processor 416 may display screen data indicating a request to input the first biometric information through the display unit 413 and may output audio data indicating a request to input the first biometric information through a speaker (not shown). In operation 1317, the processor 416 may acquire the first biometric information of the user. To this end, the processor 416 may temporarily turn on the biometric sensor of the sensor unit 414. According to an example embodiment, the processor 416 may scan a fingerprint of the user to generate a fingerprint image. Further, the processor 416 may extract at least one feature point from the fingerprint image. Accordingly, the processor 416 may acquire at least one of the fingerprint image and the feature point of the fingerprint image as the first biometric information.

In operation 1319, the processor 416 may generate second biometric information based on the first biometric information. For example, the processor 416 may encode the first biometric information to generate the second biometric information. For example, the processor 416 may encode at least one of the fingerprint image and the feature point of the fingerprint image. In operation 1321, the processor 416 may determine whether the second biometric information generated and stored in operation 513 of FIG. 5 is the same as the second biometric information generated in operation 1319.

When it is determined in operation 1321 that the two pieces of second biometric information are the same, the processor 416 may perform operation 1323. In operation 1323, the processor 416 may transmit the acquired second biometric information to the second electronic device 420. When it is determined in operation 1321 that the two pieces of second biometric information are different, the processor 416 may go back to operation 1317 to additionally acquire first biometric information on the user.

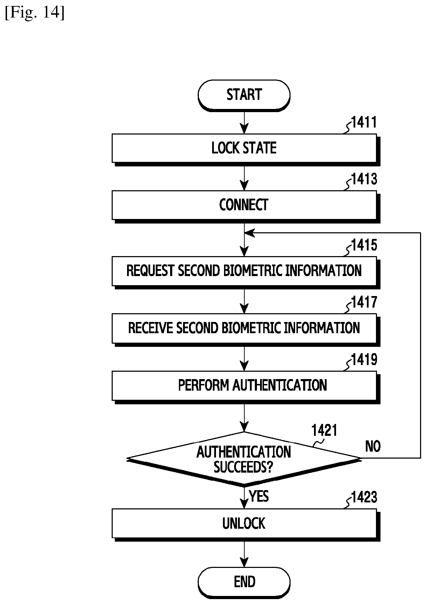

FIG. 14 is a flowchart illustrating an example method of operating the second electronic device according to an example embodiment of the present disclosure.

Referring to FIG. 14 according to an example embodiment, the processor 425 may identify that the second electronic device 420 is in a locked state in operation 1411. According to an example embodiment, the locked state of the second electronic device 420 may refer to a state in which the second electronic device 420 is supplied with power but authentication information, for example, a password, is not input so that a right to access the second electronic device 420 and a right to implement a specific function are not allowed. Here, in the locked state, the processor 425 may display an input notification screen on the display unit 423 of the second electronic device 420.

In operation 1413, the processor 425 may perform a connection to the first electronic device 410. For example, the processor 425 may perform a connection to the first electronic device 410 using a short-range communication method. When a connection request is received from the first electronic device 410, the processor 425 may determine whether to connect to the first electronic device 410. The processor 425 may transmit a connection response regarding whether to connect to the first electronic device 410. When the connection response is positive, the processor 425 may complete the connection to the first electronic device 410.

In operation 1415, the processor 425 may request second biometric information from the first electronic device 410. In operation 1417, the processor 425 may receive the second biometric information corresponding to the second biometric information from the first electronic device 410.

In operation 1419, the processor 425 may perform the authentication of the second electronic device 420 using the second biometric information received from the first electronic device 410. The processor 425 may identify whether the second biometric information received from the first electronic device 410 is the same as the second biometric information registered in operation 519 of FIG. 5. When the authentication succeeds in operation 1421, the processor 425 may perform operation 1423. For example, when the second biometric information received from the first electronic device 410 is the same as the second biometric information registered in operation 519 of FIG. 5, the processor 425 may determine that the authentication succeeds and may perform operation 1423. In operation 1423, the processor 425 may release the locked state of the second electronic device 420. The processor 425 may release the locked state to provide the user with the right to access the second electronic device 420 and the right to implement the specific function.

FIG. 15 is a flowchart illustrating an example method of performing authentication in the communication system according to another example embodiment of the present disclosure.

Referring to FIG. 15 according to an example embodiment, the second electronic device 420 (for example, the processor 425) may identify that the second electronic device 420 is in a locked state in operation 1511. According to an example embodiment, the locked state of the second electronic device 420 may refer to a state in which the second electronic device 420 is supplied with power but authentication information, for example, a password, is not input so that a right to access the second electronic device 420 and a right to implement a specific function is not allowed. Here, in the locked state, the second electronic device 420 (for example, the processor 425) may display an input notification screen on the display 423 of the second electronic device 420.

In operation 1513, the first electronic device 410 and the second electronic device 420 may perform a connection. For example, the first electronic device 410 (for example, the processor 416) may perform a connection to the second electronic device 420 using a short-range communication method. To this end, the first electronic device 410 may store the second identification information on the second electronic device 420. The first electronic device 410 (for example, the processor 416) may perform a connection to the second electronic device 420 based on a user selection. The second electronic device 420 (for example, the processor 425) may identify, using a communication method including Bluetooth Low Energy (BLE), that the first electronic device 410 is located within a threshold radius. When the first electronic device 410 is located within the threshold radius, the second electronic device 420 (for example, the processor 425) may perform a connection to the first electronic device 410.

In operation 1515, the second electronic device 420 (for example, the processor 425) may transmit a request to receive second biometric information to the first electronic device 410. When the request for the second biometric information is received from the second electronic device 420 in operation 1515, the first electronic device 410 (for example, the processor 416) may select second biometric information in operation 1517. The first electronic device 410 (for example, the processor 416) may generate new second biometric information using the first biometric information registered in operation 511 of FIG. 5. Here, the first electronic device 410 (for example, the processor 416) may encode the first biometric information to generate the second biometric information. The first electronic device 410 (for example, the processor 416) may import the second biometric information generated in operation 513 of FIG. 5. In operation 1519, the first electronic device 410 (for example, the processor 416) may transmit the new second biometric information or the imported second biometric information to the second electronic device 420.

In operation 1521, the second electronic device 420 (for example, the processor 425) may perform authentication using the second biometric information received from the first electronic device 410. When the second biometric information received from the first electronic device 410 is the same as the second biometric information registered in operation 519 of FIG. 5, the second electronic device 420 (for example, the processor 425) may succeed in authentication using the second biometric information. When the authentication succeeds using the second biometric information, the second electronic device 420 (for example, the processor 425) may release the locked state of the second electronic device 420 in operation 1523. The second electronic device 420 (for example, the processor 425) may release the locked state to provide the user with the right to access the second electronic device 420 and the right to implement the specific function.

FIG. 16 is a flowchart illustrating an example method of operating the first electronic device according to another example embodiment of the present disclosure.

Referring to FIG. 16 according to an example embodiment, the processor 416 may perform connection to the second electronic device 420 in operation 1611. For example, the processor 416 may perform connection to the second electronic device 420 using a short-range communication method. The processor 416 may transmit a connection request to the second electronic device 420. The processor 416 may receive a connection response from the second electronic device 420. When the connection response from the second electronic device 420 is positive, the processor 416 may complete connection to the second electronic device 420. To this end, the second identification information on the second electronic device 420 may be stored in the memory 415. Further, the processor 416 may perform a connection to the second electronic device 420 based on a user selection. According to an example embodiment, the processor 416 may retrieve a peripheral. For example, when the second electronic device 420 is retrieved, the processor 416 may perform connection to the second electronic device 420. Also, the processor 416 may perform connection to the second electronic device 420 based on a user selection.

In operation 1613, the processor 416 may detect a request for second biometric information. That is, when the second biometric information is requested from the second electronic device 420, operation 1615 may be performed. When no second biometric information is requested from the second electronic device 420 in operation 1613, the processor 416 may end the process.

In operation 1615, the processor 416 may select second biometric information. The processor 416 may generate new second biometric information using the first biometric information registered in operation 511 of FIG. 5. The processor 416 may import the second biometric information generated in operation 513 of FIG. 5. In operation 1615, the processor 416 may select any one of the generated second biometric information or the imported second biometric information. In operation 1617, the processor 416 may transmit the selected second biometric information to the second electronic device 420.

In addition, a method of unlocking the second electronic device 420 when the first electronic device 410 is in the automatic mode is the same as FIG. 14, for example, a method of unlocking the second electronic device 420 when the first electronic device 410 is in the manual mode, and thus a detailed description thereof is omitted herein.

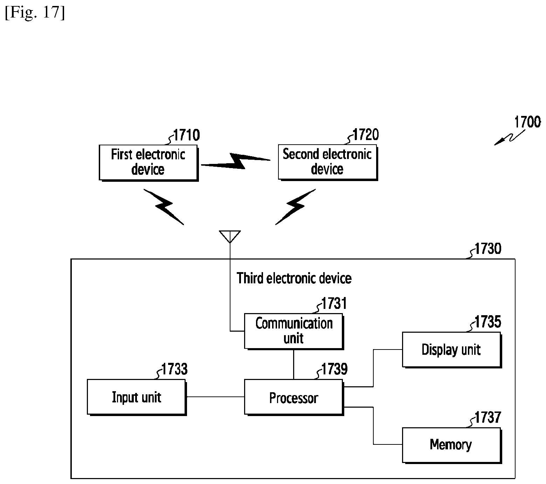

FIG. 17 is a block diagram illustrating an example communication system according to an example embodiment of the present disclosure.

Referring to FIG. 17 according to an example embodiment, the communication system 1700 according to the present disclosure may include a first electronic device 1710, a second electronic device 1720, and a third electronic device 1730. The first electronic device 1710, the second electronic device 1720, and the third electronic device 1730 may be different kinds of devices, or the first electronic device 1710, the second electronic device 1720, and the third electronic device 1730 may be the same kind of devices. The first electronic device 1710, the second electronic device 1720, and the third electronic device 1730 may be connected to communicate with each other. The first electronic device 1710 and the second electronic device 1720 may be the same as the first electronic device 410 and the second electronic device 420 of FIG. 4, respectively, and thus a detailed description thereof is omitted herein.

The third electronic device 1730 may operate with mobility. For example, the third electronic device 1730 may be carried by a user. According to various example embodiments, the third electronic device 1730 may include a communication unit (e.g., including communication circuitry) 1731, an input unit (e.g., including input circuitry) 1733, a display unit (e.g., including a display) 1735, a memory 1737, and a processor (e.g., including processing circuitry) 1739. According to an example embodiment, the third electronic device 1730 may be a wearable device, such as a smartwatch and smart glasses, or the like, but is not limited thereto. The third electronic device 1730 may store second biometric information received from the first electronic device 1710 or the second electronic device 1720 and may unlock the second electronic device 1720 using the stored second biometric information.

The communication unit 1731 may perform communication in the third electronic device 1730. Here, the communication unit 1731 may communicate with an external device using various communication methods. For example, the communication unit 1731 may perform wire-based or wireless communication. To this end, the communication unit 1731 may include at least one antenna. The communication unit 1731 may connect to at least one of a mobile communication network and a data communication network. Further, the communication unit 1731 may perform short-range communication. The external device may include, for example, at least one of an electronic device, a base station, a server, and a satellite. According to various example embodiments, the external device may include at least one of the first electronic device 1710 and the second electronic device 1720. The communication methods may include Long Term Evolution (LTE), Wideband Code Division Multiple Access (WCDMA), Global System For Mobile communications (GSM), Wireless Fidelity (WiFi), wireless Local Area Network (wireless LAN), Bluetooth, and Near Field Communications (NFC).

The input unit 1733 may include various input circuitry configured to generate input data in the third electronic device 1730. Here, the input unit 1733 may include at least one input means. For example, the input unit 1733 may include various input circuitry, such as, for example, and without limitation, at least one of a key pad, a dome switch, a physical button, a touch panel, and a jog & shuttle.

The display unit 1735 may output display data in the third electronic device 1730. For example, the display unit 1735 may include various displays, such as, for example, and without limitation, a Liquid Crystal Display (LCD), a Light Emitting Diode (LED) display, an Organic Light Emitting Diode (OLED) display, an Active Matrix Organic Light Emitting Diode (AMOLED) display, Micro Electro Mechanical Systems (MEMS), and an electronic paper display. The display 1735 may be combined with the input unit 1733 to be configured as a touch screen.

The memory 1737 may store operation programs of the third electronic device 1730. Further, the memory 1737 may store data generated while the programs are implemented. Here, the memory 1737 may store identification information on the third electronic device 1730, which is third identification information. For example, the memory 1737 may include at least one of an internal memory and an external memory. The internal memory may include at least one of a volatile memory (for example, a DRAM, an SRAM, an SDRAM, or the like) and a nonvolatile memory (for example, a one-time programmable ROM (OTPROM), a PROM, an EPROM, an EEPROM, a mask ROM, a flash ROM, a flash memory, a hard drive, or a solid state drive (SSD)). The external memory may include at least one of a flash drive, a compact flash (CF), a secure digital (SD), a micro-SD, a mini-SD, an extreme digital (xD), a multi-media card (MMC), a memory stick, and the like.

The processor 1739 may include various processing circuitry configured to control overall operations in the third electronic device 1730. Here, the processor 1739 may perform various functions. To this end, the processor 1739 may control components of the third electronic device 1730. Further, the processor 1739 may receive a command or data from the components of the third electronic device 1730 and may process the command or data.

According to an example embodiment, an electronic device (for example, the first electronic devices 410 and 1710) according to the present disclosure may include: a sensor unit (e.g., including at least one sensor) 414; a communication unit (e.g., including communication circuitry) 411; and a processor (e.g., including processing circuitry) 416 configured to be functionally connected to the sensor unit 414 and the communication unit 411, wherein the processor 416 may be configured to: acquire biometric information corresponding to a user of the electronic device (for example, the first electronic devices 410 and 1710) using the sensor unit 414; generate virtual biometric information at least based on the biometric information; and provide the virtual biometric information to an external device (for example, the second electronic devices 420 and 1720) through the communication unit 411 so that the external device (for example, the second electronic devices 420 and 1720) registers the virtual biometric information as information for authenticating the user. The biometric information corresponding to the user may include information relating to a fingerprint of the user.

The processor 416 may be configured to: display a user interface for acquiring the biometric information when a request for authentication of the user is received; acquire second biometric information using the sensor unit 414; generate second virtual biometric information using at least part of the second biometric information; and provide the second virtual biometric information to the external device (for example, the second electronic devices 420 and 1720).

When the request for the authentication is received from the external device (for example, the second electronic devices 420 and 1720), the processor 416 may be configured to provide the second virtual biometric information to the external device (for example, the second electronic devices 420 and 1720) based on the reception from the external device (for example, the second electronic devices 420 and 1720).

The electronic device (for example, the first electronic devices 410 and 1710) may further include a memory 145, and the processor 416 may be configured to store the biometric information corresponding to the user in the memory 145.

The processor 416 may be configured to receive an authentication request from the external device (for example, the second electronic devices 420 and 1720) and to generate the virtual biometric information using the stored biometric information in response to the reception.

The electronic device (for example, the first electronic devices 410 and 1710) may further include a display (for example, the display unit 413), and the processor 416 may be configured to receive a request for authentication of the user from the external device (for example, the second electronic devices 420 and 1720) and to display a user interface for acquiring the biometric information through the display (for example, the display unit 413) in response to the request.

The processor 416 may be configured to recognize an approach of the external device (for example, the second electronic devices 420 and 1720) through the sensor unit 414 and to provide the virtual biometric information to the external device (for example, the second electronic devices 420 and 1720) in response to the approach.

The communication unit 411 may include various communication circuitry, such as, for example, and without limitation, a Bluetooth or Near Field Communications (NFC) communication unit, may recognize the approach of the external device (for example, the second electronic devices 420 and 1720), and may perform an operation of connecting communication with the external device (for example, the second electronic devices 420 and 1720).

According to an example embodiment, an electronic device (for example, the third electronic device 1730) according to the present disclosure may include: a memory 1737; a communication unit (e.g., including communication circuitry) 1731 configured to communicate with a first external device (for example, the first electronic devices 410 and 1710) and a second external device (for example, the second electronic devices 420 and 1720); and a processor (e.g., including processing circuitry) 1739, wherein the processor 1739 may be configured to: receive virtual biometric information, which is generated using biometric information corresponding to a user of the first external device (for example, the first electronic devices 410 and 1710) and the electronic device (for example, the third electronic device 1730), from the first external device (for example, the first electronic devices 410 and 1710); store the virtual biometric information in the memory 1737; and transmit the stored virtual biometric information to the second external device (for example, the second electronic devices 420 and 1720).

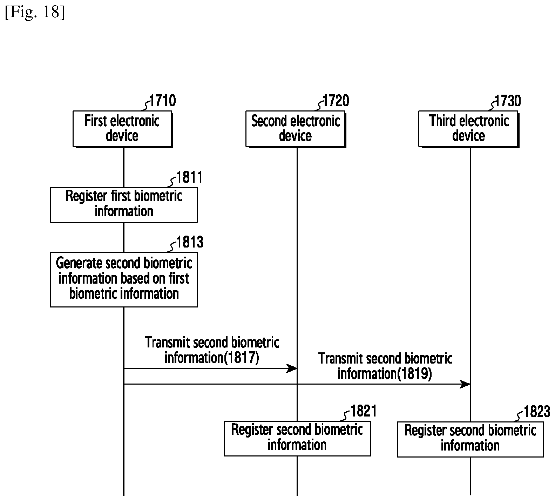

FIG. 18 is a flowchart illustrating an example method of registering biometric information in the communication system according to an example embodiment of the present disclosure.

Referring to FIG. 18 according to an example embodiment, the first electronic device 1710 (for example, the processor 416) may register first biometric information in operation 1811. The first electronic device 1710 (for example, the processor 416) may acquire the first biometric information from the user. The first electronic device 1710 (for example, the processor 416) may store the first biometric information corresponding to the user. According to one exemplary embodiment, the first electronic device 1710 (for example, the processor 416) may scan a fingerprint of the user to generate a fingerprint image. Further, the first electronic device 1710 (for example, the processor 416) may extract at least one feature point from the fingerprint image. Accordingly, the first electronic device 1710 (for example, the processor 416) may acquire at least one of the fingerprint image and the feature point of the fingerprint image as the first biometric information. Further, the first electronic device 1710 (for example, the processor 416) may store at least one of the fingerprint image and the feature point of the fingerprint image as the first biometric information.

According to an example embodiment, the first electronic device 1710 (for example, the processor 416) may set a right to access the first electronic device 1710 (for example, the processor 416) corresponding to the first biometric information. For example, the first electronic device 1710 (for example, the processor 416) may set a right to unlock the first electronic device 1710 (for example, the processor 416) corresponding to the first biometric information. Further, the first electronic device 1710 (for example, the processor 416) may set a right to implement a specific function corresponding to the first biometric information.

According to various example embodiments, in operation 1813, the first electronic device 1710 (for example, the processor 416) may generate second biometric information based on the first biometric information. Here, the first electronic device 1710 (for example, the processor 416) may encode the first biometric information to generate the second biometric information. For example, the first electronic device 1710 may store the second biometric information. According to an example embodiment, the first electronic device 1710 (for example, the processor 416) may encode at least one of the fingerprint image and the feature point of the fingerprint image.

According to various example embodiments, in operation 1817, the first electronic device 1710 (for example, the processor 416) may transmit the second biometric information to the second electronic device 1720. To this end, the first electronic device 1710 (for example, the processor 416) may store second identification information on the second electronic device 1720. The first electronic device 1710 (for example, the processor 416) may transmit the second biometric information to the second electronic device 1720 based on a user selection. For example, the first electronic device 1710 (for example, the processor 416) may transmit the second biometric information to the second electronic device 1720 using a short-range communication method. Here, the first electronic device 1710 (for example, the processor 416) may transmit first identification information along with the second biometric information.

According to various example embodiments, in operation 1819, the first electronic device 1710 (for example, the processor 416) may transmit the second biometric information to the third electronic device 1730. To this end, the first electronic device 1710 (for example, the processor 416) may store the third identification information on the third electronic device 1730. The first electronic device 1710 (for example, the processor 416) may transmit the second biometric information to the third electronic device 1730 based on a user selection. For example, the first electronic device 1710 (for example, the processor 416) may transmit the second biometric information to the third electronic device 1730 using a short-range communication method. Here, the first electronic device 1710 (for example, the processor 416) may transmit the first identification information along with the second biometric information.

According to various example embodiments, in operation 1821, the second electronic device 1720 (for example, the processor 425) may register the second biometric information. For example, the second electronic device 1720 (for example, the processor 425) may store the second biometric information corresponding to the user. Further, the second electronic device 1720 (for example, the processor 425) may store the second biometric information corresponding to the first electronic device 1710.

According to an example embodiment, the second electronic device 1720 (for example, the processor 425) may set a right to access the second electronic device 1720 (for example, the processor 425) corresponding to the second biometric information. For example, the second electronic device 1720 (for example, the processor 425) may set a right to unlock the second electronic device 1720 corresponding to the second biometric information. Also, the second electronic device 1720 (for example, the processor 425) may set a right to implement a specific function corresponding to the second biometric information.

According to various example embodiments, in operation 1823, the third electronic device 1730 (for example, the processor 1739) may register the second biometric information. That is, the third electronic device 1730 (for example, the processor 1739) may store the second biometric information corresponding to the user. Further, the third electronic device 1730 (for example, the processor 1739) may store the second biometric information corresponding to the first electronic device 1710.

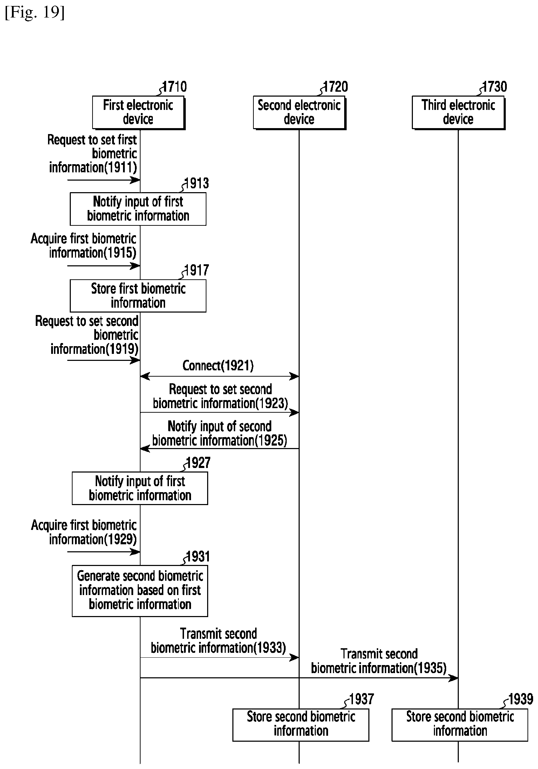

FIG. 19 is a flowchart illustrating an example method of registering biometric information in the communication system according to an example embodiment of the present disclosure.

Referring to FIG. 19 according to an example embodiment, in operation 1911, the first electronic device 1710 (for example, the processor 416) may detect a request to set first biometric information. For example, when the user makes the request to set the first biometric information in the first electronic device 1710, the first electronic device 1710 (for example, the processor 416) may detect the request. In operation 1913, the first electronic device 1710 (for example, the processor 416) may notify the user of the input of the first biometric information in response to the request to set the first biometric information. In operation 1915, the first electronic device 1710 (for example, the processor 416) may acquire the first biometric information on the user. In operation 1917, the first electronic device 1710 (for example, the processor 416) may store the first biometric information corresponding to the user.

According to various example embodiments, in operation 1919, the first electronic device 1710 (for example, the processor 416) may detect a request to set second biometric information. For example, when the user makes the request to set the second biometric information in the second electronic device 1720, the first electronic device 1710 (for example, the processor 416) may detect the request. In operation 1921, the first electronic device 1710 may perform connection to the second electronic device 1720 in response to the request to set the second biometric information. For example, the first electronic device 1710 (for example, the processor 416) may perform a connection to the second electronic device 1720 using a short-range communication method. To this end, the first electronic device 1710 may store the second identification information on the second electronic device 1720. The first electronic device 1710 (for example, the processor 416) may perform a connection to the second electronic device 1720 based on a user selection. In operation 1923, the first electronic device 1710 (for example, the processor 416) may transmit the request to set the second biometric information to the second electronic device 1720. When the request to set the second biometric information is received from the first electronic device 1710 in operation 1923, the second electronic device 1720 (for example, the processor 425) may notify the first electronic device 1710 of the input of the second biometric information in operation 1925.

According to various example embodiments, when the input of the second biometric information is notified from the second electronic device 1720 in operation 1925, the first electronic device 1710 (for example, the processor 416) may notify the user the input of first biometric information in operation 1927. The first electronic device 1710 (for example, the processor 416) may display screen data indicating a request to input the first biometric information through the display unit 413 and may output audio data indicating a request to input the first biometric information through a speaker (not shown). In operation 1929, the first electronic device 1710 (for example, the processor 416) may acquire the first biometric information on the user. In operation 1931, the first electronic device 1710 (for example, the processor 416) may generate second biometric information based on the first biometric information. Here, the first electronic device 1710 (for example, the processor 416) may encode the first biometric information to generate the second biometric information. For example, the first electronic device 1710 may store the second biometric information. In operation 1933, the first electronic device 1710 (for example, the processor 416) may transmit the second biometric information to the second electronic device 1720. When the second biometric information is received from the first electronic device 1710 in operation 1933, the second electronic device 1720 (for example, the processor 425) may store the second biometric information in operation 1937. In operation 1935, the first electronic device 1710 (for example, the processor 416) may transmit the second biometric information to the third electronic device 1730. In operation 1939, the third electronic device 1730 (for example, the processor 1739) may store the second biometric information.

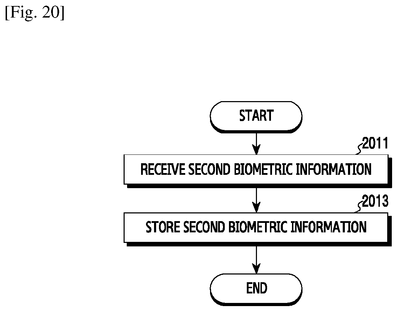

FIG. 20 is a flowchart illustrating an example method of operating the third electronic device according to an example embodiment of the present disclosure.

Referring to FIG. 20 according to an example embodiment, the processor 1739 may receive second biometric information from the first electronic device 1710 or the second electronic device 1720 in operation 2011. The third electronic device 1730 may perform wireless communication with the first electronic device 1710 or the second electronic device 1720 using short-range communication including Bluetooth and Bluetooth Low Energy (BLE) and may perform wire-based communication therewith through a cable. In operation 2013, the processor 1739 may store the second biometric information.

The operations of the first electronic device 1710 and the second electronic device 1720 illustrated in FIG. 19 are the same as the operations of the first electronic device 410 and the second electronic device 420 illustrated in FIG. 6. Therefore, the flowcharts in FIG. 7 and FIG. 8 may replace those for illustrating operating methods of the first electronic device 1710 and the second electronic device 1720.

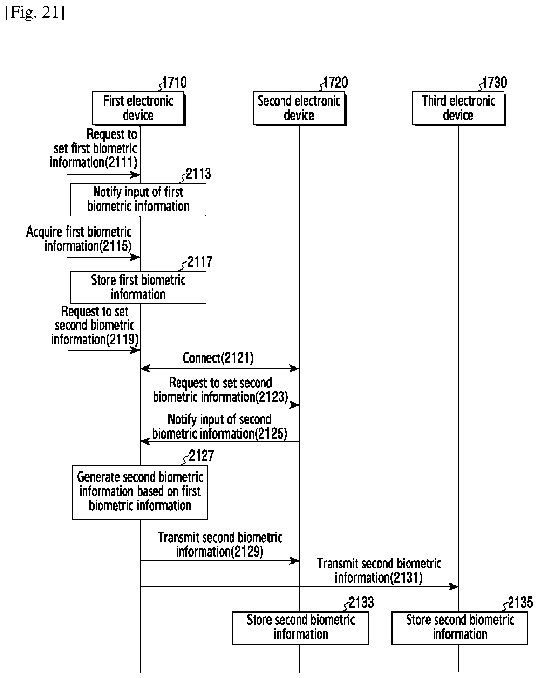

FIG. 21 is a flowchart illustrating an example method of registering biometric information in the communication system according to another example embodiment of the present disclosure.

Referring to FIG. 21 according to an example embodiment, in operation 2111, the first electronic device 1710 (for example, the processor 416) may detect a request to set first biometric information. That is, when the user makes the request to set the first biometric information in the first electronic device 1710, the first electronic device 1710 (for example, the processor 416) may detect the request. In operation 2113, the first electronic device 1710 (for example, the processor 416) may notify the user of the input of the first biometric information in response to the request. In operation 2115, the first electronic device 1710 (for example, the processor 416) may acquire the first biometric information of the user. In operation 2117, the first electronic device 1710 (for example, the processor 416) may store the first biometric information corresponding to the user.

According to various example embodiments, in operation 2119, the first electronic device 1710 (for example, the processor 416) may detect a request to set second biometric information. That is, when the user makes the request to set the second biometric information in the second electronic device 1720, the first electronic device 1710 (for example, the processor 416) may detect the request. In operation 2121, the first electronic device 1710 (for example, the processor 416) may perform a connection to the second electronic device 1720 in response to the request. For example, the first electronic device 1710 may perform connection to the second electronic device 1720 using a short-range communication method. To this end, the first electronic device 1710 may store the second identification information on the second electronic device 1720. The first electronic device 1710 (for example, the processor 416) may perform connection to the second electronic device 1720 based on a user selection. In operation 2123, the first electronic device 1710 (for example, the processor 416) may transmit the request to set the second biometric information to the second electronic device 1720. When the request to set the second biometric information is received from the first electronic device 1710 in operation 2123, the second electronic device 1720 (for example, the processor 425) may notify the first electronic device 1710 of the input of the second biometric information in operation 2125.

According to various example embodiments, in operation 2127, the first electronic device 1710 (for example, the processor 416) may generate second biometric information based on the first biometric information. The first electronic device 1710 (for example, the processor 416) may generate the second biometric information based on the first biometric information stored in operation 2117. Here, the first electronic device 1710 (for example, the processor 416) may encode the first biometric information to generate the second biometric information. For example, the first electronic device 1710 may store the second biometric information. In operation 2129, the first electronic device 1710 (for example, the processor 416) may transmit the second biometric information to the second electronic device 1720. In operation 2131, the first electronic device 1710 (for example, the processor 416) may transmit the second biometric information to the third electronic device 1730. The second electronic device 1720 (for example, the processor 425) may store the second biometric information in operation 2133, and the third electronic device 1730 (for example, the processor 1739) may store the second biometric information in operation 2135.

The operations of the first electronic device 1710 and the second electronic device 1720 illustrated in FIG. 21 are the same as the operations of the first electronic device 410 and the second electronic device 420 illustrated in FIG. 9. Therefore, the flowcharts in FIG. 10 and FIG. 8 may replace those for illustrating operating methods of the first electronic device 1710 and the second electronic device 1720. Further, the operation of the third electronic device 1730 illustrated in FIG. 21 is the same as the operation of the third electronic device 1730 illustrated in FIG. 19. Therefore, the flowchart in FIG. 20 may replace that for illustrating an operating method of the third electronic device 1730.

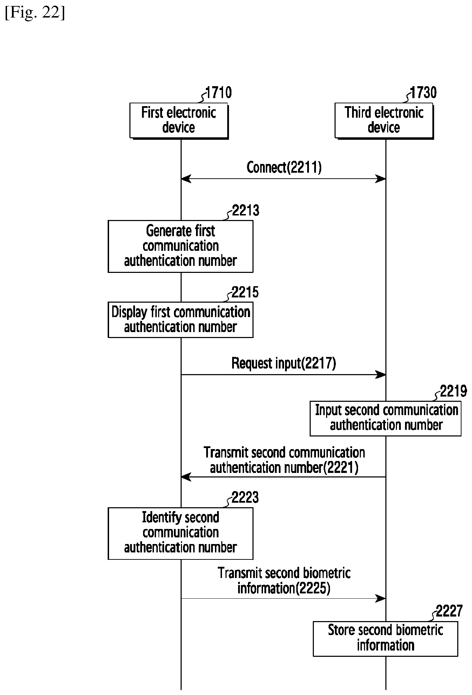

FIG. 22 is a flowchart illustrating an example method in which the first electronic device stores biometric information in the third electronic device according to an example embodiment of the present disclosure.

Referring to FIG. 22 according to an example embodiment, the first electronic device 1710 and the third electronic device 1730 may perform a connection in operation 2211. When a connection request is received from the first electronic device 1710, the third electronic device 1730 (for example, the processor 1739) may determine whether to connect to the first electronic device 1710. The third electronic device 1730 (for example, the processor 1739) may transmit a connection response regarding whether to connect to the first electronic device1710. When the connection response is positive, the third electronic device 1730 (for example, the processor 1739) may complete the connection to the first electronic device 1710.

In operation 2213, the first electronic device 1710 (for example, the processor 416) may generate a first communication authentication number. The first communication authentication number may be a Personal Identification Number (PIN) code, which may be a number for confirming that the user of the first electronic device 1710 is the same as the user of the third electronic device 1730. In operation 2215, the first electronic device 1710 (for example, the processor 416) may display the first communication authentication number on the display unit 413. In operation 2217, the first electronic device 1710 (for example, the processor 416) may request the input of the first communication authentication number from the third electronic device 1730.

In operation 2219, the third electronic device 1730 (for example, the processor 1739) may receive an input of a second communication authentication number from the user. In operation 2221, the third electronic device 1730 (for example, the processor 1739) may transmit the input second communication authentication number to the first electronic device 1710. In operation 2223, the first electronic device 1710 (for example, the processor 416) may identify the second communication authentication number received from the third electronic device 1730. The first electronic device 1710 (for example, the processor 416) may identify whether the first communication authentication number generated in operation 2213 is the same as the second communication authentication number received in operation 2221. When the first communication authentication number is the same as the second communication authentication number, the first electronic device 1710 (for example, the processor 416) may transmit second biometric information to the third electronic device 1730 in operation 2225. In operation 2227, the third electronic device 1730 may store the second biometric information received from the first electronic device 1710.

It has been described that the first electronic device 1710 (for example, the processor 416) is capable of transmitting the second biometric information to the third electronic device 1730 through wireless communication with the third electronic device 1730, without being necessarily limited thereto. When the first electronic device 1710 and the third electronic device 1730 are connected via wire-based communication, the first electronic device 1710 may transmit the second biometric information to the third electronic device 1730 without an authentication procedure using a communication authentication number.

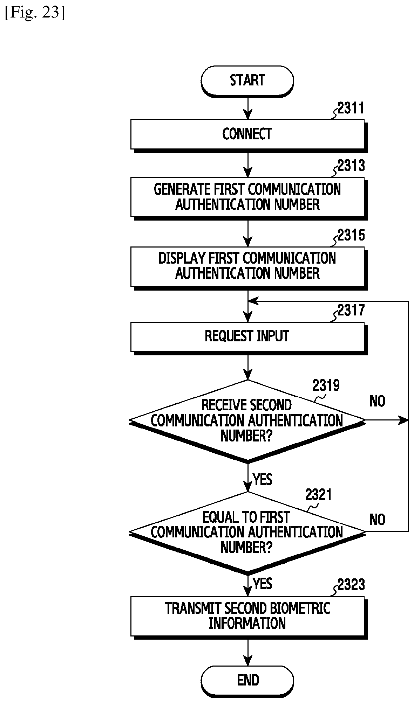

FIG. 23 is a flowchart illustrating an example method of operating the first electronic device according to an example embodiment of the present disclosure.

Referring to FIG. 23 according to an example embodiment, the processor 416 may perform a connection to the third electronic device 1730 in operation 2311. In operation 2313, the processor 416 may generate a first communication authentication number. The first communication authentication number may be a Personal Identification Number (PIN) code, which may be a number for confirming that the user of the first electronic device 1710 is the same as the user of the third electronic device 1730. In operation 2315, the processor 416 may display the generated first communication authentication number on the display unit 413.

In operation 2317, the processor 416 may request the input of the first communication authentication number from the third electronic device 1730. When a second communication authentication number is received from the third electronic device 1730 in operation 2319, the processor 416 may perform operation 2321. When no second communication authentication number is received from the third electronic device 1730 in operation 2319, the processor 416 may go back to operation 2317. In operation 2321, the processor 416 may identify whether the second communication authentication number received from the third electronic device 1730 is the same as the first communication authentication number generated in operation 2313. When the first communication authentication number is the same as the second communication authentication number in operation 2321, the processor 416 may perform operation 2323. In operation 2323, the processor 416 may transmit the second biometric information generated and stored in operation 1813 of FIG. 18 to the third electronic device 1730.

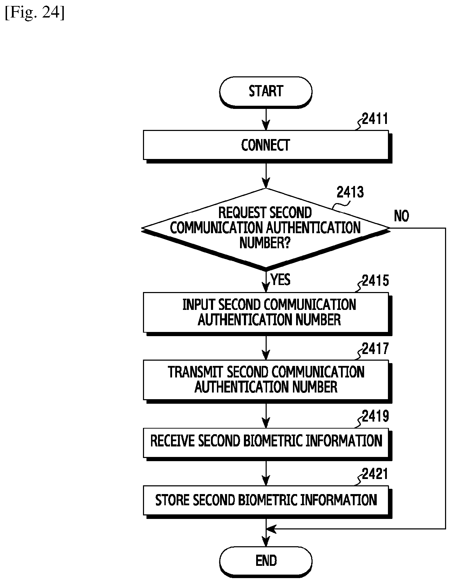

FIG. 24 is a flowchart illustrating an example method of operating the third electronic device according to an example embodiment of the present disclosure.

Referring to FIG. 24 according to an example embodiment, the processor 1739 may connect communication with the first electronic device 1710 in operation 2411. When a connection request is received from the first electronic device 1710, the processor 1739 may determine whether to connect to the first electronic device 1710. The processor 1739 may transmit a connection response regarding whether to connect to the first electronic device1710. When the connection response is positive, the processor 1739 may complete the connection to the first electronic device 1710.

When a second communication authentication number is requested from the first electronic device 1710 in operation 2413, the processor 1739 may perform operation 2415. When no second communication authentication number is requested from the first electronic device 1710 in operation 2413, the processor 1739 may end the process. The request for the second communication authentication number in operation 2413 may be a message that requests the input of a communication authentication number that is the same as a first communication authentication number displayed on the display unit 413 of the first electronic device 1710.

In operation 2415, the processor 1739 may input the second communication authentication number by the user. In operation 2417, the processor 1739 may transmit the input second communication authentication number to the first electronic device 1710. In operation 2419, the processor 1739 may receive second biometric information from the first electronic device 1710. In operation 2421, the processor 1739 may store the received second biometric information.

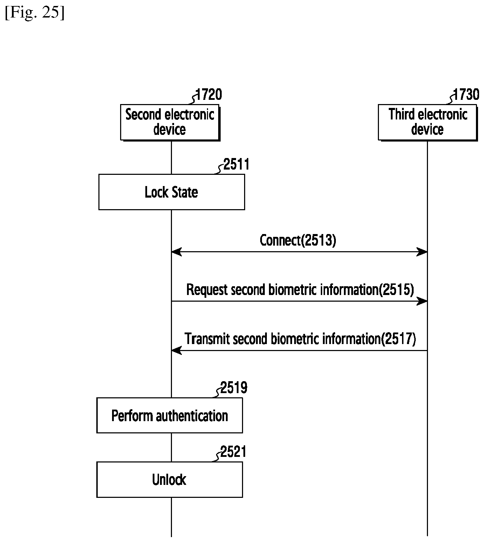

FIG. 25 is a flowchart illustrating an example method of unlocking the second electronic device according to an example embodiment of the present disclosure.

Referring to FIG. 25 according to an example embodiment, the second electronic device 1720 (for example, the processor 425) may identify that the second electronic device 1720 is in a locked state in operation 2511. According to one exemplary embodiment, the locked state of the second electronic device 1720 may refer to a state in which the second electronic device 1720 is supplied with power but authentication information, for example, a password, is not input so that a right to access the second electronic device 1720 and a right to implement a specific function are not allowed. Here, in the locked state, the second electronic device 1720 (for example, the processor 425) may display an input notification screen on the display 423 of the second electronic device 1720.

In operation 2513, the second electronic device 1720 and the third electronic device 1730 may perform a connection. For example, the second electronic device 1720 (for example, the processor 425) may perform a connection to the third electronic device 1730 using a short-range communication method. To this end, the second electronic device 1720 may store third identification information on the third electronic device 1730. The second electronic device 1720 (for example, the processor 425) may perform a connection to the third electronic device 1730 based on a user selection. The second electronic device 1720 (for example, the processor 425) may identify, using a communication method including Bluetooth Low Energy (BLE), that the third electronic device 1730 is located within a threshold radius. When the third electronic device 1730 is located within the threshold radius, the second electronic device 1720 (for example, the processor 425) may perform the connection to the third electronic device 1730.

In operation 2515, the second electronic device 1720 (for example, the processor 425) may transmit a request to receive second biometric information to the third electronic device 1730. When the request for the second biometric information is received from the second electronic device 1720 in operation 2515, the third electronic device 1730 (for example, the processor 1739) may transmit the second biometric information to the second electronic device 1720 in operation 2517.

In operation 2519, the second electronic device 1720 (for example, the processor 425) may perform authentication using the second biometric information received from the third electronic device 1730. When the second biometric information received from the third electronic device 1730 is the same as the second biometric information registered in operation 1821 of FIG. 18, the second electronic device 1720 (for example, the processor 425) may succeed in authentication using the second biometric information. When the authentication succeeds using the second biometric information, the second electronic device 1720 (for example, the processor 425) may release the locked state of the second electronic device 1720 in operation 2521. The second electronic device 1720 (for example, the processor 425) may release the locked state to provide the user with the right to access the second electronic device 1720 and the right to implement the specific function.

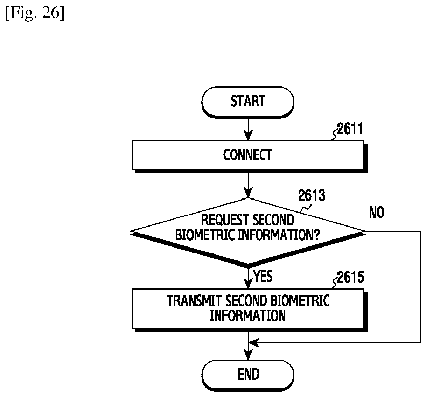

FIG. 26 is a flowchart illustrating an example method of operating the third electronic device according to an example embodiment of the present disclosure.

Referring to FIG. 26 according to an example embodiment, the processor 1739 may perform connection to the second electronic device 1720 in operation 2611. When second biometric information is requested from the second electronic device 1720 in operation 2613, the processor 1739 may perform operation 2615. When no second biometric information is requested from the second electronic device 1720 in operation 2613, the processor 1739 may end the process. In operation 2615, the processor 1739 may transmit the second biometric information stored in operation 1823 of FIG. 18 to the second electronic device 1720.

The operation of the second electronic device 1720 illustrated in FIG. 25 is the same as the operation of the second electronic device 420 illustrated in FIG. 14. Therefore, the flowchart in FIG. 14 may replace that for illustrating an operating method of the second electronic device 1720.

According to an example embodiment, an operating method of an electronic device (for example, the first electronic devices 410 and 1710) according to the present disclosure may include: acquiring biometric information corresponding to a user of the electronic device (for example, the first electronic devices 410 and 1710); generating virtual biometric information at least based on the biometric information; and providing the virtual biometric information to an external device (for example, the second electronic devices 420 and 1720) so that the external device (for example, the second electronic devices 420 and 1720) registers the virtual biometric information as information for authenticating the user. The acquiring of the biometric information may be acquiring information relating to a fingerprint of the user.

The method may further include: receiving a request for authentication of the user; displaying a user interface for acquiring the biometric information; acquiring second biometric information through the user interface; and generating second virtual biometric information using at least part of the second biometric information.

The providing of the virtual biometric information to the external device (for example, the second electronic devices 420 and 1720) may include: receiving the request for the authentication from the external device (for example, the second electronic devices 420 and 1720); and providing the second virtual biometric information to the external device (for example, the second electronic devices 420 and 1720).

The electronic device (for example, the first electronic devices 410 and 1710) may include a memory 415, and the method may further include storing the biometric information in the memory 415.

The generating of the virtual biometric information may include: receiving an authentication request from the external device (for example, the second electronic devices 420 and 1720); and generating the virtual biometric information using the stored biometric information.

The method may further include: receiving a request for authentication of the user from the external device (for example, the second electronic devices 420 and 1720); and displaying a user interface for acquiring the biometric information in response to the request.

The electronic device (for example, the first electronic devices 410 and 1710) may include a sensor unit 414, and the providing of the virtual biometric information to the external device (for example, the second electronic devices 420 and 1720) may include: recognizing an approach of the external device (for example, the second electronic devices 420 and 1720) through the sensor unit 414 and providing the virtual biometric information to the external device (for example, the second electronic devices 420 and 1720) in response to the approach.

The sensor unit 414 may include a Bluetooth or Near Field Communications (NFC) communication unit, and the recognizing of the approach of the external device (for example, the second electronic devices 420 and 1720) is recognizing the approach of the external device (for example, the second electronic devices 420 and 1720) through the Bluetooth or NFC communication unit.

The information relating to the fingerprint of the user may be information including a feature point and an image relating to the fingerprint.

According to an example embodiment, a storage medium stores commands according to the present disclosure, wherein the commands are set for at least one processor to perform at least one operation when executed by the at least one processor, and the at least one operation may include: acquiring biometric information corresponding to a user of the electronic device (for example, the first electronic devices 410 and 1710); generating virtual biometric information at least based on the biometric information; and providing the virtual biometric information to an external device (for example, the second electronic devices 420 and 1720) so that the external device (for example, the second electronic devices 420 and 1720) registers the virtual biometric information as information for authenticating the user. The acquiring of the biometric information may be acquiring information relating to a fingerprint of the user.

According to an example embodiment, an operating method of an electronic device (for example, the third electronic device 1730) according to the present disclosure may include: performing communication with a first external device (for example, the first electronic devices 410 and 1710) and a second external device (for example, the second electronic devices 420 and 1720); receiving virtual biometric information, which is generated using biometric information corresponding to a user of the first external device (for example, the first electronic devices 410 and 1710) and the electronic device (for example, the third electronic device 1730), from the first external device (for example, the first electronic devices 410 and 1710); storing the virtual biometric information; and transmitting the stored virtual biometric information to the second external device (for example, the second electronic devices 420 and 1720).

According to an example embodiment, a storage medium stores commands according to the present disclosure, wherein the commands are set for at least one processor to perform at least one operation when executed by the at least one processor, and the at least one operation may include: performing communication with a first external device (for example, the first electronic devices 410 and 1710) and a second external device (for example, the second electronic devices 420 and 1720); receiving virtual biometric information, which is generated using biometric information corresponding to a user of the first external device (for example, the first electronic devices 410 and 1710) and the electronic device (for example, the third electronic device 1730), from the first external device (for example, the first electronic devices 410 and 1710); storing the virtual biometric information; and transmitting the stored virtual biometric information to the second external device (for example, the second electronic devices 420 and 1720).

As described above, an electronic device and an operating method thereof according to the present disclosure may provide an authentication function through biometric information recognition among different kinds of electronic devices, thereby improving convenience during the user authentication.

Meanwhile, various example embodiments of the present disclosure illustrated and described in this disclosure and the drawings correspond to specific examples presented in order to easily explain technical contents of the present disclosure, and to aid in understanding of the present disclosure, but are not intended to limit the scope of the present disclosure

## Claims

1. An electronic device (420) comprising:
a memory (424);
a communication unit (421) comprising communication circuitry; and
a processor (425) functionally connected to the communication unit (421),
wherein the processor (425) is configured to:
receive (517, 817) first virtual biometric information transmitted from an external device (410);
store (519, 819) the first virtual biometric information in the memory (424); and
set a right to unlock or implement a specific function on the electronic device (420) corresponding to the first virtual biometric information stored in the memory (424); and
the electronic device being **characterized in that** the processor (425) is further configured to:
transmit (1115, 1415) a request for second virtual biometric information to the external device (410);
receive (1117, 1417) the second virtual biometric information from the external device (410); and
perform (1119, 1419) authentication based on the first virtual biometric information and the second virtual biometric information.

2. The electronic device (420) of claim 1, wherein the first virtual biometric information comprises information relating to a fingerprint of the user.

3. The electronic device (420) of claim 1, wherein the processor (425) is further configured to:
check whether the second virtual biometric information received from the external device (410) is the same as the first virtual biometric information stored in the memory (424) of the electronic device (420); and
if the second virtual biometric information is the same as the stored first virtual biometric information, unlock or implement the specific function on the electronic

4. A communication system comprising: a first electronic device (410), and a second electronic device (420) in accordance with either of claim 1 or claim 2, the second electronic device (420) being external to the first electronic device (410),
wherein the first electronic device (410) includes a sensor unit (414) comprising at least one sensor, a communication unit (411) comprising communication circuitry, and a processor (416) functionally connected to the sensor unit (414) and the communication unit (411), and
wherein the processor (416) of the first electronic device (410) is configured to:
acquire (729) first biometric information corresponding to a user of the first electronic device (410) using the sensor unit (414);
generate (513, 731) the first virtual biometric information based on the acquired first biometric information; and
provide (517, 733) the first virtual biometric information to the second electronic device (420) through the communication unit (411); and
wherein the processor (416) of the first electronic device (410) is further configured to:
receive (1115, 1313) the request for the second virtual biometric information from the second electronic device (420); and
transmit (1117, 1323) the second virtual biometric information to the second electronic device (420); wherein the second electronic device comprises a processor configured to perform (1119, 1419) authentication based on the first virtual biometric information and the second virtual biometric information.

5. The communication system of claim 4, wherein the processor (416) of the first electronic device (410) is configured to:
display a user interface for acquiring biometric information when the request is received;
acquire the second biometric information using the sensor unit (414); and
generate the second virtual biometric information using at least part of the acquired second biometric information.

6. The communication system of claim 4, wherein the first electronic device (410) further comprises a memory (415), and
wherein the processor (416) of the first electronic device (410) is configured to store the acquired first biometric information in the memory (415).

7. The communication system of claim 6, wherein the processor (416) of the first electronic device (410) is configured to generate the second virtual biometric information using the stored first biometric information in response to receiving the request.

8. The communication system of claim 4, wherein the processor (416) of the first electronic device (410) is configured to:
recognize the second electronic device (420) through the sensor unit (414); and
provide the second virtual biometric information to the second electronic device (420) in response to recognizing the second electronic device (420).

9. The communication system of claim 8, wherein the communication unit (411) of the first electronic device (410) comprises a Bluetooth or Near Field Communications, NFC, communication unit, and is configured to recognize the second electronic device (420), and to perform an operation of connecting communication with the second electronic device (420).

10. The communication system of claim 4, further comprising a third electronic device (1730) external to the first and second electronic devices (410, 420), the third electronic device (1730) comprising:
a memory (1737);
a communication unit (1731) comprising communication circuitry configured to communicate with the first electronic device (410) and the second electronic device (420); and
a processor (1739),
wherein the processor (1739) of the third electronic device (410) is configured to:
receive, from the first electronic device (410), the first virtual biometric information generated using first biometric information corresponding to a user of the first electronic device (410) and the third electronic device (1730);
store the first virtual biometric information in the memory (1737); and
transmit the stored first virtual biometric information to the second electronic device (420).

11. A method of operating an electronic device (420), the method comprising:
receiving (517, 817), from an external device (410), first virtual biometric information corresponding to a user of the external device (410);
storing (519, 819) the first virtual biometric information in a memory (424); and
setting a right to unlock or implement a specific function on the electronic device corresponding to the first virtual biometric information stored in the memory (424);
wherein the method is **characterized by**
transmitting (1115, 1415) a request for second virtual biometric information to the external device (410);
receiving (1117, 1417) the second virtual biometric information from the external device (410); and
performing (1119, 1419) authentication based on the first virtual biometric information and the second virtual biometric information.

12. The method of claim 11, wherein performing the authentication comprises:
checking whether the second virtual biometric information received from the external device (410) is the same as the first virtual biometric information stored in the memory (424) of the electronic device (420); and
if the second virtual biometric information is the same as the stored first virtual biometric information, unlocking or implementing the specific function on the electronic device (420).

13. A method of authenticating a user, the method comprising:
acquiring (729), by a first electronic device (410), first biometric information corresponding to a user of the first electronic device (410) using a sensor unit (414);
generating (731), by the first electronic device (410), first virtual biometric information based on the acquired first biometric information;
providing (733), by the first electronic device (410), the first virtual biometric information to a second electronic device (420) through a communication unit (411);
storing (519, 819), by the second electronic device (420), the first virtual biometric information in a memory (424); and
setting, by the second electronic device (420), a right to unlock or implement a specific function on the second electronic device corresponding to the first virtual biometric information stored in the memory (424);
wherein the method further comprises:
transmitting (1115, 1415), by the second electronic device, a request for second virtual biometric information to the first electronic device (410);
providing (1117, 1417), by the first electronic device (410) to the second electronic device (420), the second virtual biometric information; and
performing (1119, 1419), by the second electronic device (420), authentication based on the first virtual biometric information and the second virtual biometric information.

14. The method of claim 13, wherein performing the authentication comprises:
checking whether the second virtual biometric information received from the first electronic device (410) is the same as the first virtual biometric information stored in the memory (424) of the second electronic device (420); and
if the second virtual biometric information is the same as the stored first virtual biometric information, unlocking or implementing a specific function on the second electronic device (420).

15. The method of claim 13, further comprising:
displaying, by the first electronic device (410), a user interface for acquiring biometric information;
acquiring, by the first electronic device (410), the second biometric information through the user interface; and
generating, by the first electronic device (410), the second virtual biometric information using at least part of the acquired second biometric information.

## Patentansprüche

1. Elektronisches Gerät (420), umfassend:
einen Speicher (424);
eine Kommunikationseinheit (421), die eine Kommunikationsschaltung umfasst; und
einen Prozessor (425), der funktional mit der Kommunikationseinheit (421) verbunden ist, wobei der Prozessor (425) konfiguriert ist, um:
erste virtuelle biometrische Informationen zu empfangen (517, 817), die von einem externen Gerät (410) gesendet werden;
die ersten virtuellen biometrischen Informationen im Speicher (424) zu speichern (519, 819); und
ein Recht zum Entsperren oder Implementieren einer bestimmten Funktion auf dem elektronischen Gerät (420) festzulegen, die den ersten im Speicher (424) gespeicherten virtuellen biometrischen Informationen entspricht; und
wobei das elektronische Gerät **dadurch gekennzeichnet ist, dass** der Prozessor (425) ferner konfiguriert ist, um:
eine Anforderung auf zweite virtuelle biometrische Informationen an das externe Gerät (410) zu senden (1115, 1415);
die zweiten virtuellen biometrischen Informationen von dem externen Gerät (410) zu empfangen (1117, 1417); und
eine Authentifizierung basierend auf den ersten virtuellen biometrischen Informationen und den zweiten virtuellen biometrischen Informationen durchzuführen (1119, 1419).

2. Elektronisches Gerät (420) nach Anspruch 1, wobei die ersten virtuellen biometrischen Informationen Informationen umfassen, die sich auf einen Fingerabdruck des Benutzers beziehen.

3. Elektronisches Gerät (420) nach Anspruch 1, wobei der Prozessor (425) ferner konfiguriert ist, um:
zu prüfen, ob die zweiten virtuellen biometrischen Informationen, die von dem externen Gerät (410) empfangen werden, die gleichen wie die ersten virtuellen biometrischen Informationen sind, die in dem Speicher (424) des elektronischen Geräts (420) gespeichert ist; und
wenn die zweiten virtuellen biometrischen Informationen die gleichen wie die gespeicherten ersten virtuellen biometrischen Informationen sind, die bestimmte Funktion auf dem elektronischen Gerät (420) zu entsperren oder zu implementieren.

4. Kommunikationssystem, umfassend: ein erstes elektronisches Gerät (410) und ein zweites elektronisches Gerät (420) nach Anspruch 1 oder Anspruch 2, wobei sich das zweite elektronische Gerät (420) außerhalb des ersten elektronischen Geräts (410) befindet;
wobei das erste elektronische Gerät (410) eine Sensoreinheit (414) umfasst, die mindestens einen Sensor, eine Kommunikationseinheit (411), die eine Kommunikationsschaltung umfasst, und einen Prozessor (416), der funktionell mit der Sensoreinheit (414) und der Kommunikationseinheit (411) verbunden ist, umfasst, und
wobei der Prozessor (416) des ersten elektronischen Geräts (410) konfiguriert ist, um:
erste biometrische Informationen, die einem Benutzer des ersten elektronischen Geräts (410) entsprechen, unter Verwendung der Sensoreinheit (414) zu erfassen (729);
die ersten virtuellen biometrischen Informationen basierend auf den erfassten ersten biometrischen Informationen zu erzeugen (513, 731); und
die ersten virtuellen biometrischen Informationen an das zweite elektronische Gerät (420) über die Kommunikationseinheit (411) bereitzustellen (517, 733); und
wobei der Prozessor (416) des ersten elektronischen Geräts (410) ferner konfiguriert ist, um:
die Anforderung auf die zweiten virtuellen biometrischen Informationen von dem zweiten elektronischen Gerät (420) zu empfangen (1115, 1313); und
die zweiten virtuellen biometrischen Informationen an das zweite elektronische Gerät (420) zu senden (1117, 1323), wobei das zweite elektronische Gerät einen Prozessor umfasst, der konfiguriert ist, um eine Authentifizierung basierend auf den ersten virtuellen biometrischen Informationen und den zweiten virtuellen biometrischen Informationen durchzuführen (1119, 1419).

5. Kommunikationssystem nach Anspruch 4, wobei der Prozessor (416) des ersten elektronischen Geräts (410) konfiguriert ist, um:
eine Benutzerschnittstelle zum Erfassen biometrischer Informationen anzuzeigen, wenn die Anforderung empfangen wird;
die zweiten biometrischen Informationen unter Verwendung der Sensoreinheit (414) zu erfassen; und
die zweiten virtuellen biometrischen Informationen unter Verwendung mindestens eines Teils der erfassten zweiten biometrischen Informationen zu erzeugen.

6. Kommunikationssystem nach Anspruch 4, wobei das erste elektronische Gerät (410) ferner einen Speicher (415) umfasst und wobei der Prozessor (416) des ersten elektronischen Geräts (410) konfiguriert ist, um die erfassten ersten biometrischen Informationen in dem Speicher (415) zu speichern.

7. Kommunikationssystem nach Anspruch 6, wobei der Prozessor (416) des ersten elektronischen Geräts (410) konfiguriert ist, um die zweiten virtuellen biometrischen Informationen unter Verwendung der gespeicherten ersten biometrischen Informationen als Reaktion auf das Empfangen der Anforderung zu erzeugen.

8. Kommunikationssystem nach Anspruch 4, wobei der Prozessor (416) des ersten elektronischen Geräts (410) konfiguriert ist, um:
das zweite elektronische Gerät (420) über die Sensoreinheit (414) zu erkennen; und
die zweiten virtuellen biometrischen Informationen an das zweite elektronische Gerät (420) als Reaktion auf das Erkennen des zweiten elektronischen Geräts (420) bereitzustellen.

9. Kommunikationssystem nach Anspruch 8, wobei die Kommunikationseinheit (411) des ersten elektronischen Geräts (410) eine Bluetooth- oder Near Field Communications-, NFC-, Kommunikationseinheit umfasst und konfiguriert ist, um das zweite elektronische Gerät (420) zu erkennen und einen Vorgang zum Verbinden der Kommunikation mit dem zweiten elektronischen Gerät (420) durchzuführen.

10. Kommunikationssystem nach Anspruch 4, ferner umfassend ein drittes elektronisches Gerät (1730) außerhalb des ersten und zweiten elektronischen Geräts (410, 420), wobei das dritte elektronische Gerät (1730) umfasst:
ein Speicher (1737);
eine Kommunikationseinheit (1731), die eine Kommunikationsschaltung umfasst, die konfiguriert ist, um mit dem ersten elektronischen Gerät (410) und dem zweiten elektronischen Gerät (420) zu kommunizieren; und
einen Prozessor (1739),
wobei der Prozessor (1739) des dritten elektronischen Geräts (410) konfiguriert ist, um:
von dem ersten elektronischen Gerät (410) die ersten virtuellen biometrischen Informationen zu empfangen, die unter Verwendung von ersten biometrischen Informationen erzeugt werden, die einem Benutzer des ersten elektronischen Geräts (410) und des dritten elektronischen Geräts (1730) entsprechen;
die ersten virtuellen biometrischen Informationen im Speicher (1737) zu speichern; und
die gespeicherten ersten virtuellen biometrischen Informationen an das zweite elektronische Gerät (420) zu senden.

11. Verfahren zum Betreiben eines elektronischen Geräts (420), wobei das Verfahren umfasst:
Empfangen (517, 817), von einem externen Gerät (410), von ersten virtuellen biometrischen Informationen, die einem Benutzer des externen Geräts (410) entsprechen;
Speichern (519, 819) der ersten virtuellen biometrischen Information in einem Speicher (424); und
Festlegen eines Rechts zum Entsperren oder Implementieren einer bestimmten Funktion auf dem elektronischen Gerät, die den ersten virtuellen biometrischen Informationen entspricht, die in dem Speicher (424) gespeichert sind;
wobei das Verfahren **gekennzeichnet ist durch**
Senden (1115, 1415) einer Anforderung auf zweite virtuelle biometrische Informationen an das externe Gerät (410);
Empfangen (1117, 1417) der zweiten virtuellen biometrischen Informationen von dem externen Gerät (410); und
Durchführen (1119, 1419) einer Authentifizierung basierend auf den ersten virtuellen biometrischen Informationen und den zweiten virtuellen biometrischen Informationen.

12. Verfahren nach Anspruch 11, wobei das Durchführen der Authentifizierung umfasst:
Prüfen, ob die zweiten virtuellen biometrischen Informationen, die von dem externen Gerät (410) empfangen werden, die gleichen wie die ersten virtuellen biometrischen Informationen sind, die in dem Speicher (424) des elektronischen Geräts (420) gespeichert ist; und
wenn die zweiten virtuellen biometrischen Informationen die gleichen wie die gespeicherten ersten virtuellen biometrischen Informationen sind, Entsperren oder Implementieren der bestimmten Funktion auf dem elektronischen Gerät (420).

13. Verfahren zum Authentifizieren eines Benutzers, wobei das Verfahren umfasst:
Erfassen (729), durch ein erstes elektronisches Gerät (410), von ersten biometrischen Informationen, die einem Benutzer des ersten elektronischen Geräts (410) entsprechen, unter Verwendung einer Sensoreinheit (414);
Erzeugen (731), durch das erste elektronische Gerät (410), von ersten virtuellen biometrischen Informationen basierend auf den erfassten ersten biometrischen Informationen;
Bereitstellen (733), durch das erste elektronische Gerät (410), der ersten virtuellen biometrischen Informationen an ein zweites elektronisches Gerät (420) über eine Kommunikationseinheit (411);
Speichern (519, 819) der ersten virtuellen biometrischen Informationen in einem Speicher (424) durch das zweite elektronische Gerät (420); und
Festlegen, durch das zweite elektronische Gerät (420), eines Rechts zum Entsperren oder Implementieren einer bestimmten Funktion auf dem zweiten elektronischen Gerät, die den ersten virtuellen biometrischen Informationen entspricht, die in dem Speicher (424) gespeichert sind;
wobei das Verfahren ferner umfasst:
Senden (1115, 1415), durch das zweite elektronische Gerät, einer Anforderung auf zweite virtuelle biometrische Informationen an das erste elektronische Gerät (410);
Bereitstellen (1117, 1417), durch das erste elektronische Gerät (410) an das zweite elektronische Gerät (420), der zweiten virtuellen biometrischen Informationen; und
Durchführen (1119, 1419), durch das zweite elektronische Gerät (420), einer Authentifizierung basierend auf den ersten virtuellen biometrischen Informationen und den zweiten virtuellen biometrischen Informationen.

14. Verfahren nach Anspruch 13, wobei das Durchführen der Authentifizierung umfasst:
Prüfen, ob die zweiten virtuellen biometrischen Informationen, die von dem ersten elektronischen Gerät (410) empfangen werden, die gleichen wie die ersten virtuellen biometrischen Informationen sind, die in dem Speicher (424) des zweiten elektronischen Geräts (420) gespeichert sind; und
wenn die zweiten virtuellen biometrischen Informationen die gleichen wie die gespeicherten ersten virtuellen biometrischen Informationen sind, Entsperren oder Implementieren einer bestimmten Funktion auf dem zweiten elektronischen Gerät (420).

15. Verfahren nach Anspruch 13, ferner umfassend:
Anzeigen, durch das erste elektronische Gerät (410), einer Benutzerschnittstelle zum Erfassen biometrischer Informationen;
Erfassen, durch das erste elektronische Gerät (410), der zweiten biometrischen Informationen über die Benutzerschnittstelle; und
Erzeugen, durch das erste elektronische Gerät (410), der zweiten virtuellen biometrischen Informationen unter Verwendung mindestens eines Teils der erfassten zweiten biometrischen Informationen.

## Revendications

1. Dispositif électronique (420) comprenant : une mémoire (424) ;
une unité de communication (421) comprenant un ensemble de circuits de communication ; et un processeur (425) connecté fonctionnellement à l'unité de communication (421), ledit processeur (425) étant configuré pour :
recevoir (517, 817) des premières informations biométriques virtuelles émises à partir d'un dispositif externe (410) ;
stocker (519, 819) les premières informations biométriques virtuelles dans la mémoire (424) ; et
établir un droit de déverrouillage ou de mise en œuvre d'une fonction spécifique sur le dispositif électronique (420) correspondant aux premières informations biométriques virtuelles stockées dans la mémoire (424) ; et
le dispositif électronique étant **caractérisé en ce que** le au moins un processeur (425) est en outre configuré pour :
émettre (1115, 1415) une demande de secondes informations biométriques virtuelles au dispositif externe (410) ;
recevoir (1117, 1417) les secondes informations biométriques virtuelles en provenance du dispositif externe (410) ; et
réaliser (1119, 1419) une authentification sur la base des premières informations biométriques virtuelles et des secondes informations biométriques virtuelles.

2. Dispositif électronique (420) selon la revendication 1, lesdites premières informations biométriques virtuelles comprenant des informations relatives à une empreinte digitale de l'utilisateur.

3. Dispositif électronique (420) selon la revendication 1, ledit processeur (425) étant en outre configuré pour :
vérifier si les secondes informations biométriques virtuelles reçues en provenance du dispositif externe (410) sont les mêmes que les premières informations biométriques virtuelles stockées dans la mémoire (424) du dispositif électronique (420) ; et
si les secondes informations biométriques virtuelles sont les mêmes que les premières informations biométriques virtuelles stockées, déverrouiller ou mettre en œuvre la fonction spécifique sur le dispositif électronique (420).

4. Système de communication comprenant : un premier dispositif électronique (410) et un deuxième dispositif électronique (420) selon l'une des revendications 1 ou 2, le deuxième dispositif électronique (420) étant externe au premier dispositif électronique (410), ledit premier dispositif électronique (410) comprenant un une unité de capteur (414) comprenant au moins un capteur, une unité de communication (411) comprenant un ensemble de circuits de communication, et un processeur (416) connecté fonctionnellement à l'unité de capteur (414) et à l'unité de communication (411), et ledit processeur (416) du premier dispositif électronique (410) étant configuré pour : acquérir (729) des premières informations biométriques correspondant à un utilisateur du premier dispositif électronique (410) à l'aide de l'unité de capteur (414) ;
générer (513, 731) les premières informations biométriques virtuelles sur la base des premières informations biométriques acquises ; et
fournir (517, 733) les premières informations biométriques virtuelles au deuxième dispositif électronique (420) par l'intermédiaire de l'unité de communication (411) ; et
ledit processeur (416) du premier dispositif électronique (410) étant en outre configuré pour :
recevoir (1115, 1313) la demande des secondes informations biométriques virtuelles en provenance du deuxième dispositif électronique (420) ; et
émettre (1117, 1323) les secondes informations biométriques virtuelles vers le deuxième dispositif électronique (420) ledit deuxième dispositif électronique comprenant un processeur configuré pour réaliser (1119, 1419) une authentification sur la base des premières informations biométriques virtuelles et des secondes informations biométriques virtuelles.

5. Système de communication selon la revendication 4, ledit processeur (416) du premier dispositif électronique (410) étant configuré pour :
afficher une interface utilisateur en vue de l'acquisition des informations biométriques lorsque la demande est reçue ;
acquérir les secondes informations biométriques à l'aide de l'unité de capteur (414) ; et
générer les secondes informations biométriques virtuelles à l'aide d'au moins une partie des secondes informations biométriques acquises.

6. Système de communication selon la revendication 4, ledit premier dispositif électronique (410) comprenant en outre une mémoire (415), et ledit processeur (416) du premier dispositif électronique (410) étant configuré pour stocker les premières informations biométriques acquises dans la mémoire (415).

7. Système de communication selon la revendication 6, ledit processeur (416) du premier dispositif électronique (410) étant configuré pour générer les secondes informations biométriques virtuelles à l'aide des premières informations biométriques stockées en réponse à la réception de la demande.

8. Système de communication selon la revendication 4, ledit processeur (416) du premier dispositif électronique (410) étant configuré pour :
reconnaître le deuxième dispositif électronique (420) à travers l'unité de capteur (414) ; et
fournir les secondes informations biométriques virtuelles au deuxième dispositif électronique (420) en réponse à la reconnaissance du deuxième dispositif électronique (420).

9. Système de communication selon la revendication 8, ladite unité de communication (411) du premier dispositif électronique (410) comprenant une unité de communication Bluetooth ou de communication en champ proche (NFC) et étant configurée pour reconnaître le deuxième dispositif électronique (420), et pour réaliser une opération de connexion de communication avec le deuxième dispositif électronique (420).

10. Système de communication selon la revendication 4, comprenant en outre un troisième dispositif électronique (1730) externe aux premier et deuxième dispositifs électroniques (410, 420), le troisième dispositif électronique (1730) comprenant :
une mémoire (1737) ;
une unité de communication (1731) comprenant un ensemble de circuits de communication configurés pour communiquer avec le premier dispositif électronique (410) et le deuxième dispositif électronique (420) ; et
un processeur (1739), ledit processeur (1739) du troisième dispositif électronique (410) étant configuré pour :
recevoir, en provenance du premier dispositif électronique (410), les premières informations biométriques virtuelles générées à l'aide des premières informations biométriques correspondant à un utilisateur du premier dispositif électronique (410) et du troisième dispositif électronique (1730) ;
stocker les premières informations biométriques virtuelles dans la mémoire (1737) ; et émettre les premières informations biométriques virtuelles stockées vers le deuxième dispositif électronique (420).

11. Procédé de fonctionnement d'un dispositif électronique (420), le procédé comprenant : la réception (517, 817), en provenance d'un dispositif externe (410), de premières informations biométriques virtuelles correspondant à un utilisateur du dispositif externe (410) ;
le stockage (519, 819) des premières informations biométriques virtuelles dans une mémoire (424) ; et l'établissement d'un droit de déverrouillage ou de mise en œuvre d'une fonction spécifique sur le dispositif électronique correspondant aux premières informations biométriques virtuelles stockées dans la mémoire (424) ; ledit procédé étant **caractérisé par** l'émission (1115, 1415) d'une demande de secondes informations biométriques virtuelles au dispositif externe (410) ;
la réception (1117, 1417) des secondes informations biométriques virtuelles en provenance du dispositif externe (410) ; et
la réalisation (1119, 1419) d'une authentification sur la base des premières informations biométriques virtuelles et des secondes informations biométriques virtuelles.

12. Procédé selon la revendication 11, ladite réalisation de l'authentification comprenant :
la vérification pour savoir si les secondes informations biométriques virtuelles reçues en provenance du dispositif externe (410) sont les mêmes que les premières informations biométriques virtuelles stockées dans la mémoire (424) du dispositif électronique (420) ; et
si les secondes informations biométriques virtuelles sont les mêmes que les premières informations biométriques virtuelles stockées, le déverrouillage ou la mise en œuvre de la fonction spécifique sur le dispositif électronique (420).

13. Procédé d'authentification d'un utilisateur, ledit procédé comprenant :
l'acquisition (729), par un premier dispositif électronique (410), des premières informations biométriques correspondant à un utilisateur du premier dispositif électronique (410) à l'aide d'une unité de capteur (414) ;
la génération (731), par le premier dispositif électronique (410), des premières informations biométriques virtuelles sur la base des premières informations biométriques acquises ;
la fourniture (733), par le premier dispositif électronique (410), des premières informations biométriques virtuelles à un deuxième dispositif électronique (420) par l'intermédiaire d'une unité de communication (411) ;
le stockage (519, 819), par le deuxième dispositif électronique (420), des premières informations biométriques virtuelles dans une mémoire (424) ; et
l'établissement, par le deuxième dispositif électronique (420), d'un droit de déverrouillage ou de mise en œuvre d'une fonction spécifique sur le deuxième dispositif électronique correspondant aux premières informations biométriques virtuelles stockées dans la mémoire (424) ; ledit procédé comprenant en outre :
l'émission (1115, 1415) par le deuxième dispositif électronique, d'une demande de secondes informations biométriques virtuelles vers le premier dispositif électronique (410) ;
la fourniture (1117, 1417), par le premier dispositif électronique (410) au deuxième dispositif électronique (420), des secondes informations biométriques virtuelles ; et
la réalisation (1119, 1419), par le deuxième dispositif électronique (420), d'une authentification sur la base des premières informations biométriques virtuelles et des secondes informations biométriques virtuelles.

14. Procédé selon la revendication 13, ladite réalisation de l'authentification comprenant : la vérification pour savoir si les secondes informations biométriques virtuelles reçues en provenance du premier dispositif électronique (410) sont les mêmes que les premières informations biométriques virtuelles stockées dans la mémoire (424) du deuxième dispositif électronique (420) ; et
si les secondes informations biométriques virtuelles sont les mêmes que les premières informations biométriques virtuelles stockées, le déverrouillage ou la mise en œuvre d'une fonction spécifique sur le deuxième dispositif électronique (420).

15. Procédé selon la revendication 13, comprenant en outre :
l'affichage, par le premier dispositif électronique (410), d'une interface utilisateur en vue de l'acquisition des informations biométriques ;
l'acquisition, par le premier dispositif électronique (410), des secondes informations biométriques par l'intermédiaire de l'interface utilisateur ; et
la génération, par le premier dispositif électronique (410), des secondes informations biométriques virtuelles à l'aide d'au moins une partie des secondes informations biométriques acquises.
